# EUROPEAN PATENT APPLICATION

(11) **EP 4 436 061 A1**
(43) Date of publication of application: **25.09.2024**
(21) Application number: 24165676.8
(22) Date of filing: 22.03.2024
(51) Int. Cl.: H04B 7/155

(54) **A REPEATER SWITCHABLE BETWEEN A DUPLEX MODE AND A SIMPLEX MODE**

(30) Priority: 23.03.2023 US 202363491950 P
(71) Applicant: Wilson Electronics, LLC, St. George, UT 84790 (US)
(72) Inventor: Patel, Ilesh V., Euless, 76039 (US); ANDERSON, Dale Robert, Colleyville, 76034 (US); Raggio, Glen Stewart, Dallas, 75231 (US); Martin, Jr. James A, Midland, 79705 (US); Farris, Stephen Todd, Frisco, 75035 (US); ASHWORTH, Christopher Ken, Toquerville, 84774 (US)
(74) Representative: ip21 Ltd

(57) **Abstract**

A technology is described for a repeater that is switchable between a duplex mode and a simplex mode. The repeater comprises a first antenna port coupled to a first antenna, a second antenna port coupled to a second antenna, and a third antenna port coupled to a third antenna. The repeater further comprises first direction amplification paths coupled between the first antenna port and the second antenna port and second direction amplification paths coupled between the first antenna port and one of the second antenna port and the third antenna port. A controller can switch the repeater between a duplex mode, to communicate a first-direction RF signal from the second antenna port and communicate a second-direction RF signal to the second antenna port, and a simplex mode, to communicate the first-direction RF signal from the second antenna port and communicate the second-direction RF signal to the third antenna port.

## Description

### BACKGROUND

Repeaters can be used to increase the quality of wireless communication between a wireless device and a wireless communication access point, such as a cell tower. Repeaters can increase the quality of the wireless communication by amplifying, filtering, and/or applying other processing techniques to uplink and downlink signals communicated between the wireless device and the wireless communication access point.

As an example, the repeater can receive, via an antenna, downlink signals from the wireless communication access point. The repeater can amplify the downlink signal and then provide an amplified downlink signal to the wireless device. In other words, the repeater can act as a relay between the wireless device and the wireless communication access point. As a result, the wireless device can receive a stronger signal from the wireless communication access point. Similarly, uplink signals from the wireless device (e.g., telephone calls and other data) can be received at the repeater. The repeater can amplify the uplink signals before communicating, via an antenna, the uplink signals to the wireless communication access point.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1a illustrates a repeater system with duplex ports in accordance with an example;
FIG. 1b illustrates a repeater system with simplex server ports in accordance with an example;
FIG. 2 illustrates a repeater in communication with a wireless device and a base station in accordance with an example;
FIG. 3 illustrates a repeater having a first direction amplification and filtering path and a second direction amplification and filtering path in accordance with an example;
FIG. 4a illustrates a frequency division duplex (FDD) multiband repeater configured to operate with duplex ports or simplex ports in accordance with an example;
FIG. 4b illustrates an FDD repeater configured to operate with N duplex ports or N simplex ports in a first band in accordance with an example;
FIG. 4c illustrates an FDD repeater configured to operate with N duplex ports or N simplex ports in a second band in accordance with an example;
FIG. 4d illustrates a portion of the FDD repeater of FIGs. 4b and 4c with additional amplification, filtering, and/or attenuation applied between the N-way splitters and the duplexer in accordance with an example;
FIG. 4e illustrates a multiband FDD repeater configured to operate with N duplex ports or N simplex ports in accordance with an example;
FIG 5a illustrates a time division duplex (TDD) multiband repeater with duplex ports in accordance with an example;
FIG. 5b illustrates a TDD multiband repeater with simplex server ports in accordance with an example;
FIG. 6 illustrates a diagram of a wireless device in accordance with an example.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### Definitions

In describing and claiming the present invention, the following terminology will be used.

As used herein, a "first-direction Radio Frequency (RF) signal" is an RF signal communicated in a specific direction that is one of an uplink RF signal or a downlink RF signal.

As used herein, a "second-direction RF signal" is an RF signal that is communicated in an opposite direction of the first-direction RF signal; the second-direction RF signal is one of a downlink RF signal or an uplink RF signal.

As used herein, a "duplex port" is a repeater port that is configured to simultaneously communicate a first-direction radio frequency signal and a second-direction RF signal. The duplex port is configured to be coupled to an amplification and filtering path that is configured to be operable to amplify and/or filter the first-direction RF signal and a separate amplification and filtering path that is configured to be operable to amplify and/or filter the second-direction RF signal. The amplification of the RF signals by the amplification and filtering paths can be greater than or less than unity.

As used herein, a "simplex port" is a repeater port that is configured to receive either a first-direction RF signal or a second-direction RF signal. The simplex port is configured to be coupled to an amplification and filtering path that is configured to be operable to amplify and/or filter the first-direction RF signal or a separate amplification and filtering path that is configured to be operable to amplify and/or filter the second-direction RF signal. The amplification of the RF signals by the amplification and filtering paths can be greater than or less than unity.

As used herein, a "duplex antenna" is an antenna connected to or configured to be connected to a duplex port. The duplex antenna can transmit and receive RF signals.

As used herein, a "simplex antenna" is an antenna connected to or configured to be connected to a simplex port. The simplex antenna can transmit or receive RF signals.

The singular forms "a," "an," and "the" include plural referents unless the context clearly dictates otherwise. Thus, for example, reference to "a transceiver" includes reference to one or more of such structures and reference to "switching" refers to one or more of such operations.

As used herein with respect to an identified property or circumstance, "substantially" refers to a degree of deviation that is sufficiently small so as to not measurably detract from the identified property or circumstance. The exact degree of deviation allowable may in some cases depend on the specific context. The use of "substantially" is equally applicable when used in a negative connotation to refer to the complete or near complete lack of an action, characteristic, property, state, structure, item, or result.

As used herein, "adjacent" refers to the proximity of two structures or elements. Particularly, elements that are identified as being "adjacent" may be either abutting or connected. Such elements may also be near or close to each other without necessarily contacting each other. The exact degree of proximity may in some cases depend on the specific context.

As used herein, the term "about" is used to provide flexibility and imprecision associated with a given term, metric or value. The degree of flexibility for a particular variable can be readily determined by one skilled in the art. However, unless otherwise enunciated, the term "about" generally connotes flexibility of less than 2%, and most often less than 1%, and in some cases less than 0.01%.

As used herein, comparative terms such as "increased," "decreased," "better," "worse," "higher," "lower," "enhanced," "improved," "maximized," "minimized," and the like refer to a property of a device, component, composition, or activity that is measurably different from other devices, components, compositions, or activities that are in a surrounding or adjacent area, that are similarly situated, that are in a single device or composition or in multiple comparable devices or compositions, that are in a group or class, that are in multiple groups or classes, or as compared to an original or baseline state, or the known state of the art. For example, an FPGA with "reduced" runtime can refer to an FPGA which has a lower runtime duration than one or more other FPGAs. A number of factors can cause such reduced runtime, including materials, configurations, architecture, connections, etc.

Reference in this specification may be made to devices, structures, systems, or methods that provide "improved" performance. It is to be understood that unless otherwise stated, such "improvement" is a measure of a benefit obtained based on a comparison to devices, structures, systems, or methods in the prior art. Furthermore, it is to be understood that the degree of improved performance may vary between disclosed embodiments and that no equality or consistency in the amount, degree, or realization of improved performance is to be assumed as universally applicable.

In this disclosure, "comprises," "comprising," "containing" and "having" and the like can have the meaning ascribed to them in U.S. Patent law and can mean "includes," "including," and the like, and are generally interpreted to be open ended terms. The terms "consisting of" or "consists of" are closed terms, and include only the components, structures, steps, or the like specifically listed in conjunction with such terms, as well as that which is in accordance with U.S. Patent law. "Consisting essentially of" or "consists essentially of" have the meaning generally ascribed to them by U.S. Patent law. In particular, such terms are generally closed terms, with the exception of allowing inclusion of additional items, materials, components, steps, or elements that do not materially affect the basic and novel characteristics or function of the item(s) used in connection therewith. For example, trace elements present in a composition, but not affecting the compositions nature or characteristics would be permissible if present under the "consisting essentially of" language, even though not expressly recited in a list of items following such terminology. When using an open-ended term, like "comprising" or "including," in the written description it is understood that direct support should be afforded also to "consisting essentially of" language as well as "consisting of" language as if stated explicitly and vice versa.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein.

The term "coupled," as used herein, is defined as directly or indirectly connected in a biological, chemical, mechanical, electrical, or nonelectrical manner. "Directly coupled" structures or elements are in contact with one another. In this written description, recitation of "coupled" or "connected" provides express support for "directly coupled" or "directly connected" and vice versa. Objects described herein as being "adjacent to" each other may be in physical contact with each other, in close proximity to each other, or in the same general region or area as each other, as appropriate for the context in which the phrase is used.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a *de facto* equivalent of any other member of the same list solely based on their presentation in a common group without indications to the contrary.

As used herein, the term "at least one of" is intended to be synonymous with "one or more of." For example, "at least one of A, B and C" explicitly includes only A, only B, only C, or combinations of each.

Numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a numerical range of about 1 to about 4.5 should be interpreted to include not only the explicitly recited limits of 1 to about 4.5, but also to include individual numerals such as 2, 3, 4, and sub-ranges such as 1 to 3, 2 to 4, etc. The same principle applies to ranges reciting only one numerical value, such as "less than about 4.5," which should be interpreted to include all of the above-recited values and ranges. Further, such an interpretation should apply regardless of the breadth of the range or the characteristic being described.

Any steps recited in any method or process claims may be executed in any order and are not limited to the order presented in the claims. Means-plus-function or step-plus-function limitations will only be employed where for a specific claim limitation all of the following conditions are present in that limitation: a) "means for" or "step for" is expressly recited; and b) a corresponding function is expressly recited. The structure, material or acts that support the means-plus function are expressly recited in the description herein. Accordingly, the scope of the invention should be determined solely by the appended claims and their legal equivalents, rather than by the descriptions and examples given herein.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Repeaters can increase the quality of the wireless communication by amplifying, filtering, and/or applying other processing techniques to uplink and downlink signals communicated between the wireless device and the wireless communication access point.

In many cases, a repeater amplifies and filters an uplink or downlink signal before transmission to a wireless device or wireless communication access point, but a repeater may not be configured to operate in conjunction with fiber optic signals. Fiber optic networks are typically simplex networks that communicate in only one direction. Using fiber optic communication can enhance the signal transmitted from a repeater to a wireless device or wireless communication access point by: (i) decreasing the degree of loss in the signal, (ii) increasing the coverage volume of the signal with less loss, and (iii) minimizing the number of repeaters used for the coverage volume. For example, a large university campus can use a fiber optic network in conjunction with repeaters to provide a substantially loss-less signal over a wider area. Or, in the case of a 1 00-floor skyscraper, a fiber optic network can be distributed throughout the building on each floor.

Radio frequency repeaters typically function in a different manner when using coaxial connections to the antennas, which are typically configured for duplex communications, compared with repeaters that are configured to use fiber optics, which are typically configured for simplex communications, to communicate with antennas.

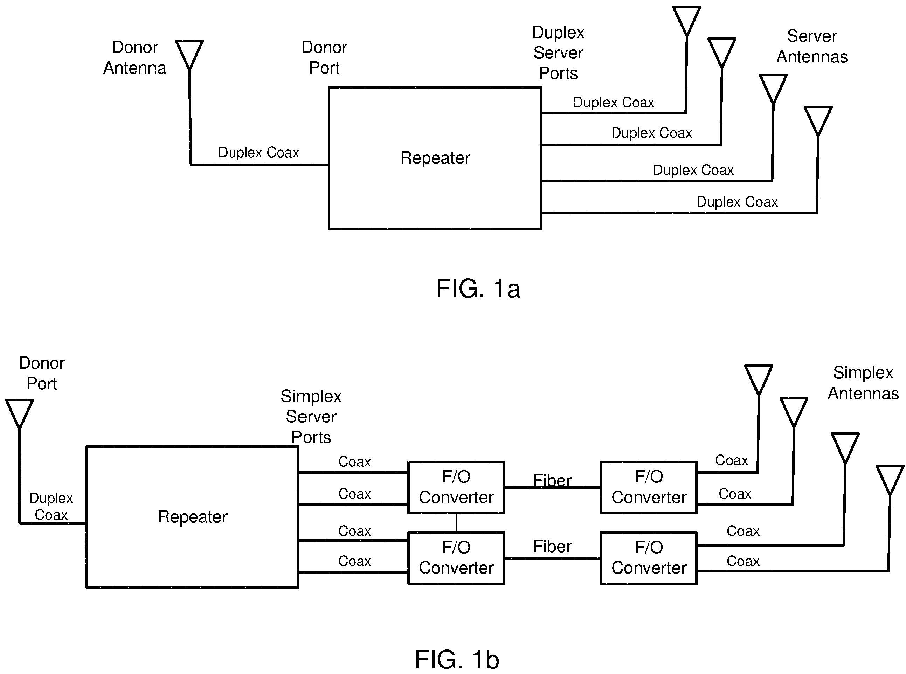

Atypical Radio Frequency (RF) repeater is illustrated in FIG. 1a. A donor port antenna is configured to be coupled to a donor port on an RF repeater. The donor port antenna can be a duplex antenna that can send and receive signals with one or more radio frequency source, such as a cellular base station. The received signals can be filtered and amplified by the repeater. The filtered and amplified signals can then be distributed, via one or more server ports, to one or more server antennas. The server antenna is also typically configured for two-way (duplex) communication. This enables the server antenna to both send and receive signals from a radio frequency source, such as a cellular phone or other type of wireless user equipment (UE). Accordingly, there is full duplex communication between the donor port and the server port in the RF repeater. The duplex communication can be communicated over a typical coaxial cable from the server port(s) to duplex server antennas that are configured to be coupled to the repeater.

Coaxial cables are typically used to run relatively short distances and carry the full duplex communications from the server port(s) of the repeater to the server antenna(s). The server port and the donor port of the repeater can each be duplex ports. Each duplex port is coupled to at least two amplification and filtering paths. Each amplification and filtering path is configured to be operable to filter and amplify an RF signal, with each path configured to carry a selected directional signal (i.e. an uplink or downlink signal). This enables the repeater to provide amplification and filtering of full duplex communications between a donor port and a server port. This will be discussed in more detail in the proceeding paragraphs.

In contrast with a repeater system that is configured to use only coaxial cables, a repeater system that is configured to use fiber optic links between at least a portion of the distance between the repeater ports and the antennas is typically configured for single direction (simplex) communication. The server is configured with simplex ports rather than duplex ports. In order to send and receive signals of different directions, two separate simplex connections (i.e. simplex ports) can be used at the repeater. Accordingly, a repeater that is configured to communicate over a simplex fiber optic connection typically has at least two separate simplex ports that are each configured to be coupled to an amplification and filtering path that is configured to be operable to amplify and/or filter the first-direction RF signal or a separate amplification and filtering path that is configured to be operable to amplify and/or filter the second-direction RF signal. The amplification of the RF signals by the amplification and filtering paths can be greater than or less than unity.

With a repeater that is configured for use with a fiber optic link (simplex communications) being different from a repeater that is configured for use with only coaxial cables (duplex communications), it can cause difficulties for potential repeater customers. The repeater customer may not know ahead of time whether to purchase a repeater that is configured for simplex communication or a repeater that is configured for duplex communication. A repeater installer faces a similar problem, often not knowing which type of repeater is needed until after arriving at an installation site.

Disclosed herein is a radio frequency repeater that can be configured to operate in both a duplex mode and a simplex mode. When the repeater is operating in the duplex mode, such as the example of the repeater in FIG. 1a, the repeater can be configured for duplex communications between two duplex ports, such as a donor port that is a duplex port and a server port that is a duplex port. Duplex communications can pass between the two duplex ports, enabling full duplex communications between a first antenna, such as a duplex antenna configured to be coupled to a donor port that is configured for duplex communication, and one or more additional antennas, such as antenna(s) configured to be coupled to server ports that are configured for duplex communication. A radio frequency connection capable of carrying duplex communications can be coupled between the duplex ports and the antennas. In one example, a coaxial cable can be used to couple the antennas to the duplex ports. While the term "duplex coax" is used in FIG. 1a, this is not intended to be limiting. The term "duplex coax" merely refers to coaxial cable that is capable of carrying duplex signaling. The "duplex coax" can also be used to carry simplex signaling.

When the repeater is switched to operate in a simplex mode, the repeater can be configured to provide duplex communication via two or more separate simplex ports instead of a single duplex port. In one example, only one of the repeater sides, such as the donor side or the server side can have ports that are switched for simplex communication. FIG. 1b includes one example of a repeater that is configured for simplex communication on the server side. In the example of FIG. 1b, the first port can be a donor port that is a duplex port configured for duplex communications. The first port can be coupled, via multiple amplification and filtering paths, to multiple simplex ports (i.e. simplex server ports).

In one example, the simplex ports that are simplex server antenna ports can be coupled directly to a fiber optic link. Alternatively, the simplex server antenna ports can be coupled, via a radio frequency connection such as a coaxial cable, to an RF to fiber optic (F/O) converter. In this embodiment, the server antenna ports on the repeater can be referred to as interconnect ports rather than antenna ports. The RF to F/O converter can be configured to modulate an RF signal onto an optical carrier signal. Directional RF signals can be carried by separate optical signals on separate simplex optical fibers in a fiber optic network that is coupled to a fiber optic to RF converter. The first direction can be referred to as forward path. The second direction can be referred to as reverse path. The fiber optic to RF converter can be configured to receive the RF signal modulated on the optical carrier signal and transmit the RF signal to an RF port. The fiber optic to RF converter can be configured to be coupled to separate simplex antennas. The separate simplex antennas can be configured to communicate with a wireless device, such as a cell phone or another type of user equipment (UE). Each simplex antenna can be configured to receive or transmit a directional signal, such as an uplink signal or a downlink signal.

In one embodiment, the repeater can be configured to switch between a duplex mode of operation, such as the mode illustrated in the example of FIG. 1a, and a simplex mode of operation, such as the mode illustrated in the example of FIG. 1b. A repeater that can switch between a duplex mode and a simplex mode can enable a customer or installer to purchase the same repeater. The repeater can then be used for either of a duplex installation, such as an installation using coaxial cables coupled from repeater ports to antennas, as illustrated in the example of FIG. 1a, or a simplex installation, such as an installation that uses a fiber optic network to carry simplex RF signals over at least a portion of the distance between the repeater and the antennas, as illustrated in the example of FIG. 1b.

While FIG. 1b illustrates an example of a simplex fiber optic system, it is not intended to be limiting. The fiber optic converter illustrated in FIG. 1b can also be configured to provide wavelength division multiplexing (WDM) to enable more than one signal to be carried on a fiber optic line. Using WDM, each fiber optic can carry both a frequency division duplex (FDD) uplink signal and an FDD downlink signal that are each multiplexed at different wavelengths onto a single fiber. The fiber optic can also carry TDD UL and DL signals using WDM.

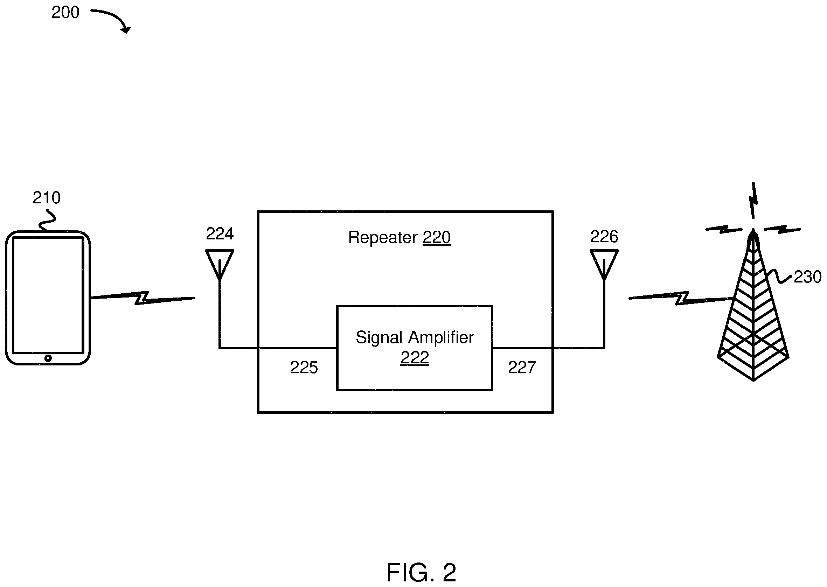

FIG. 2 illustrates an example illustration of a cellular communication system 200 that comprises one or more user equipment (UEs) (e.g., 210) that are in wireless communication with one or more base stations (e.g., 230). The communication range between the UE 210 and base station 230 is limited based on distance between the UE 210 and base station 230, government limitations on transmission power, interference, and other considerations. While one base station is illustrated in this example, it is not intended to be limiting. A cellular communication system can include hundreds, or thousands of different base stations. Different types of base stations can also be used, including traditional high-power base stations designed to cover a broad range of up to kilometers of area, down to relatively low power base stations designed to be at a user's operating location and communicate hundreds of feet. The cellular communication system 200 can have wired or wireless connections with the base station 230. The cellular communication system 200 can include additional cellular communications equipment that can be used to process cellular signals and provide information and instructions to the base station 230 and/or UE 210 for communication within the cellular communication system 200.

FIG. 2 illustrates an exemplary repeater 220 in communication with a wireless device 210 and a base station 230. The repeater 220 can be referred to as a signal booster. A repeater can be an electronic device used to amplify (or boost) signals. The repeater 220 (also referred to as a cellular signal amplifier) can improve the quality of wireless communication by amplifying, filtering, and/or applying other processing techniques via a signal amplifier 222 to uplink signals communicated from the wireless device 210 to the base station 230 and/or downlink signals communicated from the base station 230 to the wireless device 210. In other words, the repeater 220 can amplify or boost uplink signals and/or downlink signals bi-directionally. The repeater can be referred to as a bidirectional amplifier. In one example, the repeater 220 can be at a fixed location, such as in a home or office. Alternatively, the repeater 220 can be attached to a mobile object, such as a vehicle or a wireless device 210.

In one configuration, the repeater 220 can include a server antenna 224 (e.g., an inside antenna, device antenna, or a coupling antenna) and a donor antenna 226 (e.g., a node antenna or an outside antenna). The donor antenna 226 can receive the downlink signal from the base station 230. The downlink signal can be provided to the signal amplifier 222 via an RF communication path, such as a second coaxial cable 227 or other type of radio frequency connection operable to communicate radio frequency signals. The signal amplifier 222 can include one or more cellular signal amplifiers for amplification and filtering. The downlink signal that has been amplified and filtered can be provided to the server antenna 224 via a first coaxial cable 225 or other type of radio frequency connection operable to communicate radio frequency signals. The server antenna 224 can wirelessly communicate the downlink signal that has been amplified and filtered to the wireless device 210.

Similarly, the server antenna 224 can receive an uplink signal from the wireless device 210. The uplink signal can be provided to the signal amplifier 222 via the first coaxial cable 225 or other type of radio frequency connection operable to communicate radio frequency signals. The signal amplifier 222 can include one or more cellular signal amplifiers for amplification and filtering. The uplink signal that has been amplified and filtered can be provided to the donor antenna 226 via the second coaxial cable 227 or other type of radio frequency connection operable to communicate radio frequency signals. The server antenna 226 can communicate the uplink signal that has been amplified and filtered to the base station 230.

In one example, the repeater 220 can filter the uplink and downlink signals using any suitable analog or digital filtering technology including, but not limited to, surface acoustic wave (SAW) filters, bulk acoustic wave (BAW) filters, film bulk acoustic resonator (FBAR) filters, ceramic filters, waveguide filters or low-temperature co-fired ceramic (LTCC) filters.

In one example, the repeater 220 can send uplink signals to a node and/or receive downlink signals from the node. The node can comprise a wireless wide area network (WWAN) access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or another type of WWAN access point.

In one example, the repeater 220 can include a battery to provide power to various components, such as the signal amplifier 222, the server antenna 224 and the donor antenna 226. The battery can also power the wireless device 210 (e.g., phone or tablet). Alternatively, the repeater 220 can receive power from the wireless device 210.

In one configuration, the repeater 220, also referred to as a signal booster, can be a Federal Communications Commission (FCC)-compatible consumer repeater. As a non-limiting example, the repeater 220 can be compatible with FCC Part 20 or 47 Code of Federal Regulations (C.F.R.) Part 20.21 (March 21, 2013). In addition, the handheld booster can operate on the frequencies used for the provision of subscriber-based services under parts 22 (Cellular), 24 (Broadband PCS), 27 (AWS-1, 700 megahertz (MHz) Lower A-E Blocks, and 700 MHz Upper C Block), and 90 (Specialized Mobile Radio) of 47 C.F.R. The repeater 220 can be configured to automatically self-monitor its operation to ensure compliance with applicable noise and gain limits. The repeater 220 can either self-correct or shut down automatically if the repeater's operations violate the regulations defined in 47 CFR Part 20.21. While a repeater that is compatible with FCC regulations is provided as an example, it is not intended to be limiting. The repeater can be configured to be compatible with other governmental regulations based on the location where the repeater is configured to operate.

In one configuration, the repeater 220 can improve the wireless connection between the wireless device 210 and the base station 230 (e.g., cell tower) or another type of wireless wide area network (WWAN) access point (AP) by amplifying desired signals relative to a noise floor. The repeater 220 can boost signals for cellular standards, such as the Third Generation Partnership Project (3GPP) Evolved Universal Mobile Telecommunications System (UMTS) Terrestrial Radio Access (E-UTRA) Release 8, 9, 10, 11, 12, 13, 14, 15, 16, 17, or 18, or 3GPP 5G Release 15, 16, 17 or 18. In one configuration, the repeater 220 can boost signals for 3GPP E-UTRA Release 18.0.0 (January 2023) or other desired releases. The repeater 220 can boost signals from the 3GPP Technical Specification (TS) 36.101 (Release 18 January 2023) bands, referred to as E-UTRA frequency bands. For example, the repeater 220 can be a multi-band signal booster configured to boost signals from selected E-UTRA and 5G frequency bands, such as bands: 2, 4, 5, 12, 13, 17, 25, and 26. In addition, the repeater 220 can be configured to boost selected frequency bands based on the country or region in which the repeater is used, including any of bands 1-88 and 103 or other bands, as disclosed in 3GPP TS 36.104 V18.0.0 (January 2023), and depicted in Table 1. The repeater 220 can be configured to meet the 3GPP TS 36.106 V17.0.0 (April 2022) and 38.106 V17.3.0 (January 2023) specification requirements.

**Table 1:**

| **E-UTRA Operating Band** | **Uplink (UL) operating band BS receive UE transmit** | **Downlink (DL) operating band BS transmit UE receive** | **Duplex Mode** |
|---|---|---|---|
| | F_{UL_low} - F_{UL_high} | F_{DL_low} - F_{DL_high} | |
| 1 | 1920 MHz - 1980 MHz | 2110 MHz - 2170 MHz | FDD |
| 2 | 1850 MHz - 1910 MHz | 1930 MHz - 1990 MHz | FDD |
| 3 | 1710 MHz - 1785 MHz | 1805 MHz - 1880 MHz | FDD |
| 4 | 1710 MHz - 1755 MHz | 2110 MHz - 2155 MHz | FDD |
| 5 | 824 MHz - 849 MHz | 869 MHz - 894MHz | FDD |
| 6' | 830 MHz - 840 MHz | 875 MHz - 885 MHz | FDD |
| 7 | 2500 MHz - 2570 MHz | 2620 MHz - 2690 MHz | FDD |
| 8 | 880 MHz - 915 MHz | 925 MHz - 960 MHz | FDD |
| 9 | 1749.9 MHz - 1784.9 MHz | 1844.9 MHz - 1879.9 MHz | FDD |
| 10 | 1710 MHz - 1770 MHz | 2110 MHz - 2170 MHz | FDD |
| 11 | 1427.9 MHz - 1447.9 MHz | 1475.9 MHz - 1495.9 MHz | FDD |
| 12 | 699 MHz - 716 MHz | 729 MHz - 746 MHz | FDD |
| 13 | 777 MHz - 787 MHz | 746 MHz - 756 MHz | FDD |
| 14 | 788 MHz - 798 MHz | 758 MHz - 768 MHz | FDD |
| 15 | Reserved | Reserved | FDD |
| 16 | Reserved | Reserved | FDD |
| 17 | 704 MHz - 716 MHz | 734 MHz - 746 MHz | FDD |
| 18 | 815 MHz - 830 MHz | 860 MHz - 875 MHz | FDD |
| 19 | 830 MHz - 845 MHz | 875 MHz - 890 MHz | FDD |
| 20 | 832 MHz - 862 MHz | 791 MHz - 821 MHz | FDD |
| 21 | 1447.9 MHz - 1462.9 MHz | 1495.9 MHz - 1510.9 MHz | FDD |
| 22 | 3410 MHz - 3490 MHz | 3510 MHz - 3590 MHz | FDD |
| 23¹ | 2000 MHz - 2020 MHz | 2180 MHz - 2200 MHz | FDD |
| 24¹⁷ | 1626.5 MHz - 1660.5 MHz | 1525 MHz - 1559 MHz | FDD |
| 25 | 1850 MHz - 1915 MHz | 1930 MHz - 1995 MHz | FDD |
| 26 | 814 MHz - 849 MHz | 859 MHz - 894 MHz | FDD |
| 27 | 807 MHz - 824 MHz | 852 MHz - 869 MHz | FDD |
| 28 | 703 MHz - 748 MHz | 758 MHz - 803 MHz | FDD |
| 29 | N/A | 717 MHz - 728 MHz | FDD² |
| 30¹⁵ | 2305 MHz - 2315 MHz | 2350 MHz - 2360 MHz | FDD |
| 31 | 452.5 MHz - 457.5 MHz | 462.5 MHz - 467.5 MHz | FDD |
| 32 | N/A | 1452 MHz - 1496 MHz | FDD² |
| 33 | 1900 MHz - 1920 MHz | 1900 MHz - 1920 MHz | TDD |
| 34 | 2010 MHz - 2025 MHz | 2010 MHz - 2025 MHz | TDD |
| 35 | 1850 MHz - 1910 MHz | 1850 MHz - 1910 MHz | TDD |
| 36 | 1930 MHz - 1990 MHz | 1930 MHz - 1990 MHz | TDD |
| 37 | 1910 MHz - 1930 MHz | 1910 MHz - 1930 MHz | TDD |
| 38 | 2570 MHz - 2620 MHz | 2570 MHz - 2620 MHz | TDD |
| 39 | 1880 MHz - 1920 MHz | 1880 MHz - 1920 MHz | TDD |
| 40 | 2300 MHz - 2400 MHz | 2300 MHz - 2400 MHz | TDD |
| 41 | 2496 MHz 2690 MHz | 2496 MHz 2690 MHz | TDD |
| 42 | 3400 MHz - 3600 MHz | 3400 MHz - 3600 MHz | TDD |
| 43 | 3600 MHz - 3800 MHz | 3600 MHz - 3800 MHz | TDD |
| 44 | 703 MHz - 803 MHz | 703 MHz - 803 MHz | TDD |
| 45 | 1447 MHz - 1467 MHz | 1447 MHz - 1467 MHz | TDD |
| 46 | 5150 MHz - 5925 MHz | 5150 MHz - 5925 MHz | TDD⁸ |
| 47 | 5855 MHz - 5925 MHz | 5855 MHz - 5925 MHz | TDD¹¹ |
| 48 | 3550 MHz - 3700 MHz | 3550 MHz - 3700 MHz | TDD |
| 49 | 3550 MHz - 3700 MHz | 3550 MHz - 3700 MHz | TDD¹⁶ |
| 50 | 1432 MHz - 1517 MHz | 1432 MHz - 1517 MHz | TDD¹³ |
| 51 | 1427 MHz - 1432 MHz | 1427 MHz - 1432 MHz | TDD¹³ |
| 52 | 3300 MHz - 3400 MHz | 3300 MHz - 3400 MHz | TDD |
| 53 | 2483.5 MHz - 2495 MHz | 2483.5 MHz - 2495 MHz | TDD |
| 54 | 1670 MHz - 1675 MHz | 1670 MHz - 1675 MHz | TDD |
| ... | | | |
| 64 | Reserved | | |
| 65 | 1920 MHz - 2010 MHz | 2110 MHz - 2200 MHz | FDD |
| 66 | 1710 MHz - 1780 MHz | 2110 MHz - 2200 MHz | FDD⁴ |
| 67 | N/A | 738 MHz - 758 MHz | FDD² |
| 68 | 698 MHz - 728 MHz | 753 MHz - 783 MHz | FDD |
| 69 | N/A | 2570 MHz - 2620 MHz | FDD² |
| 70 | 1695 MHz - 1710 MHz | 1995 MHz - 2020 MHz | FDD¹⁰ |
| 71 | 663 MHz - 698 MHz | 617 MHz - 652 MHz | FDD |
| 72 | 451 MHz - 456 MHz | 461 MHz - 466 MHz | FDD |
| 73 | 450 MHz - 455 MHz | 460 MHz - 465 MHz | FDD |
| 74 | 1427 MHz - 1470 MHz | 1475 MHz - 1518 MHz | FDD |
| 75 | N/A | 1432 MHz - 1517 MHz | FDD² |
| 76 | N/A | 1427 MHz - 1432 MHz | FDD² |
| 85 | 698 MHz - 716 MHz | 728 MHz - 746 MHz | FDD |
| 87 | 410 MHz - 415 MHz | 420 MHz - 425 MHz | FDD |
| 88 | 412 MHz - 417 MHz | 422 MHz - 427 MHz | FDD |
| 103¹⁸ | 787 MHz - 788 MHz | 757 MHz - 758 MHz | FDD |
| NOTE 1: | Band 6, 23 is not applicable | | |
| NOTE 2: | Restricted to E-UTRA operation when carrier aggregation is configured. The downlink operating band is paired with the uplink operating band (external) of the carrier aggregation configuration that is supporting the configured Pcell. | | |
| NOTE 3: | A UE that complies with the E-UTRA Band 65 minimum requirements in this specification shall also comply with the E-UTRA Band 1 minimum requirements. | | |
| NOTE 4: | The range 2180-2200 MHz of the DL operating band is restricted to E-UTRA operation when carrier aggregation is configured. | | |
| NOTE 5: | A UE that supports E-UTRA Band 66 shall receive in the entire DL operating band | | |
| NOTE 6: | A UE that supports E-UTRA Band 66 and CA operation in any CA band shall also comply with the minimum requirements specified for the DL CA configurations CA_66B, CA_66C and CA_66A-66A. | | |
| NOTE 7: | A UE that complies with the E-UTRA Band 66 minimum requirements in this specification shall also comply with the E-UTRA Band 4 minimum requirements. | | |
| NOTE 8: | This band is an unlicensed band restricted to licensed-assisted operation using Frame Structure Type 3 | | |
| NOTE 9: | In this version of the specification, restricted to E-UTRA DL operation when carrier aggregation is configured. | | |
| NOTE 10: | The range 2010-2020 MHz of the DL operating band is restricted to E-UTRA operation when carrier aggregation is configured and TX-RX separation is 300 MHz. The range 2005-2020 MHz of the DL operating band is restricted to E-UTRA operation when carrier aggregation is configured and TX-RX separation is 295 MHz. | | |
| NOTE 11: | This band is unlicensed band used for V2X communication. There is no expected network deployment in this band so Frame Structure Type 1 is used. | | |
| NOTE 12: | A UE that complies with the E-UTRA Band 74 minimum requirements in this specification shall also comply with the E-UTRA Band 11 and Band 21 minimum requirements. | | |
| NOTE 13: | UE that complies with the E-UTRA Band 50 minimum requirements in this specification shall also comply with the E-UTRA Band 51 minimum requirements. | | |
| NOTE 14: | A UE that complies with the E-UTRA Band 75 minimum requirements in this specification shall also comply with the E-UTRA Band 76 minimum requirements. | | |
| NOTE 15: | Uplink transmission is not allowed at this band for UE with external vehicle-mounted antennas. | | |
| NOTE 16: | This band is restricted to licensed-assisted operation using Frame Structure Type 3 | | |
| NOTE 17: | DL operation in this band is restricted to 1526 - 1536 MHz and UL operation is restricted to 1627.5 - 1637.5 MHz and 1646.5 - 1656.5 MHz. | | |
| NOTE 18: | This band is restricted to NB-IoT operation only | | |

In another configuration, the repeater 300 can boost signals from the 3GPP Technical Specification (TS) 38.101 (Release 18.0.0 January 2023) bands or 5G frequency bands. In addition, the repeater 300 can boost selected frequency bands based on the country or region in which the repeater is used, including any of the 5G frequency bands n1 - n105 in Frequency Range 1 (FR1), and n257 - n263, and non-terrestrial bands n255 and n256 or other bands, as disclosed in 3GPP TS 38.101-1 V18.0.0 (January 2023) and TS 38.101-2 V18.0.0 (January 2023), and depicted in Table 2 and Table 3:

**Table 2:**

| **NR operating band** | **Uplink (UL) *operating band* BS receive / UE transmit F_{UL_low} - F_{UL_high}** | **Downlink (DL) *operating band* BS transmit / UE receive F_{DL_low} - F_{DL_high}** | **Duplex Mode** |
|---|---|---|---|
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n13 | 777 MHz - 787 MHz | 746 MHz - 756 MHz | FDD |
| n14 | 788 MHz - 798 MHz | 758 MHz - 768 MHz | FDD |
| n18 | 815 MHz - 830 MHz | 860 MHz - 875 MHz | FDD |
| n20 | 832 MHz - 862 MHz | 791 MHz - 821 MHz | FDD |
| n24¹⁶ | 1626.5 MHz - 1660.5 MHz | 1525 MHz - 1559 MHz | FDD |
| n25 | 1850 MHz - 1915 MHz | 1930 MHz - 1995 MHz | FDD |
| n26 | 814 MHz - 849 MHz | 859 MHz - 894 MHz | FDD |
| n28 | 703 MHz - 748 MHz | 758 MHz - 803 MHz | FDD |
| n29 | N/A | 717 MHz - 728 MHz | SDL |
| n30³ | 2305 MHz - 2315 MHz | 2350 MHz - 2360 MHz | FDD |
| n34 | 2010 MHz - 2025 MHz | 2010 MHz - 2025 MHz | TDD |
| n38¹⁰ | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n46 | 5150 MHz - 5925 MHz | 5150 MHz - 5925 MHz | TDD¹³ |
| n47¹¹ | 5855 MHz - 5925 MHz | 5855 MHz - 5925 MHz | TDD |
| n48 | 3550 MHz - 3700 MHz | 3550 MHz - 3700 MHz | TDD |
| n50 | 1432 MHz - 1517 MHz | 1432 MHz - 1517 MHz | TDD¹ |
| n51 | 1427 MHz - 1432 MHz | 1427 MHz - 1432 MHz | TDD |
| n53 | 2483.5 MHz - 2495 MHz | 2483.5 MHz - 2495 MHz | TDD |
| n65 | 1920 MHz - 2010 MHz | 2110 MHz - 2200 MHz | FDD⁴ |
| n66 | 1710 MHz - 1780 MHz | 2110 MHz - 2200 MHz | FDD |
| n67 | N/A | 738 MHz - 758 MHz | SDL |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77¹² | 3300 MHz - 4200 MHz | 3300 MHz - 4200 MHz | TDD |
| n78 | 3300 MHz - 3800 MHz | 3300 MHz - 3800 MHz | TDD |
| n79¹⁷ | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n85 | 698 MHz - 716 MHz | 728 MHz - 746 MHz | FDD |
| n86 | 1710 MHz - 1780 MHz | N/A | SUL |
| n89 | 824 MHz - 849 MHz | N/A | SUL |
| n90 | 2496 MHz - 2690 MHz | 2496 MHz - 2690 MHz | TDD⁵ |
| n91 | 832 MHz - 862 MHz | 1427 MHz - 1432 MHz | FDD⁹ |
| n92 | 832 MHz - 862 MHz | 1432 MHz - 1517 MHz | FDD⁹ |
| n93 | 880 MHz - 915 MHz | 1427 MHz - 1432 MHz | FDD⁹ |
| n94 | 880 MHz - 915 MHz | 1432 MHz - 1517 MHz | FDD⁹ |
| n95⁸ | 2010 MHz - 2025 MHz | N/A | SUL |
| n96¹⁴ | 5925 MHz - 7125 MHz | 5925 MHz - 7125 MHz | TDD¹³ |
| n97¹⁵ | 2300 MHz - 2400 MHz | N/A | SUL |
| n98¹⁵ | 1880 MHz - 1920 MHz | N/A | SUL |
| n99¹⁶ | 1626.5 MHz - 1660.5 MHz | N/A | SUL |
| n100 | 874.4 MHz - 880 MHz | 919.4 MHz - 925 MHz | FDD |
| n101 | 1900 MHz - 1910 MHz | 1900 MHz - 1910 MHz | TDD |
| n102¹⁴ | 5925 MHz - 6425 MHz | 5925 MHz - 6425 MHz | TDD¹³ |
| n104^{17,18} | 6425 MHz - 7125 MHz | 6425 MHz - 7125 MHz | TDD |
| n105 | 663 MHz - 703 MHz | 612 MHz - 652 MHz | FDD |
| NOTE 1: | UE shall that complies with the NR Band n50 minimum requirements in this specification also comply with the NR Band n51 minimum requirements. | | |
| NOTE 2: | UE shall that complies with the NR Band n75 minimum requirements in this specification also comply with the NR Band n76 minimum requirements. | | |
| NOTE 3: | Uplink transmission is not allowed at this band for UE with external vehicle-mounted antennas. | | |
| NOTE 4: | A UE that complies with the NR Band n65 minimum requirements in this specification shall also comply with the NR Band n1 minimum requirements. | | |
| NOTE 5: | Unless otherwise stated, the applicability of requirements for Band n90 is in accordance with that for Band n41; a UE supporting Band n90 shall meet the requirements for Band n41. A UE supporting Band n90 shall also support band n41. | | |
| NOTE 6: | A UE that supports NR Band n66 shall receive in the entire DL operating band. | | |
| NOTE 7: | A UE that supports NR Band n66 and CA operation in any CA band shall also comply with the minimum requirements specified for the DL CA configurations CA_n66B and CA_n66(2A) in the current version of the specification. | | |
| NOTE 8: | This band is applicable in China only. | | |
| NOTE 9: | by Variable duplex operation does not enable dynamic variable duplex configuration the network, and is used such that DL and UL frequency ranges are supported independently in any valid frequency range for the band. | | |
| NOTE 10: | V2X When this band is used for V2X SL service, the band is exclusively used for NR in particular regions. | | |
| NOTE 11: | This band is unlicensed band used for V2X service. There is no expected network deployment in this band. | | |
| NOTE 12: | In the USA this band is restricted to 3450 - 3550 MHz and 3700 - 3980 MHz. In Canada this band is restricted to 3450 - 3650 MHz and 3650 - 3980 MHz. | | |
| NOTE 13: | This band is restricted to operation with shared spectrum channel access as defined in 37.213. | | |
| NOTE 14: | This band is applicable only in countries/regions designating this band for shared-spectrum access use subject to country-specific conditions. | | |
| NOTE 15: | The requirements for this band are applicable only where no other NR or E-UTRA TDD operating band(s) are used within the frequency range of this band in the same geographical area. For scenarios where other NR or E-UTRA TDD operating band(s) are used within the frequency range of this band in the same geographical area, special co-existence requirements may apply that are not covered by the 3GPP specifications. | | |
| NOTE 16: | DL operation in this band is restricted to 1526 - 1536 MHz and UL operation is restricted to 1627.5 - 1637.5 MHz and 1646.5 - 1656.5 MHz. | | |
| NOTE 17: | For this band, CORESET#0 values from Table 13-5 or Table 13-6 in [8, TS 38.213] are applied regardless of the minimum channel bandwidth. | | |
| NOTE 18: | [This band is applicable only to RCC countries in accordance with RCC Recommendation 1/21] | | |

**Table 3:**

| **Operating Band** | **Uplink (UL) operating band BS receive UE transmit** | **Downlink (DL) operating band BS transmit UE receive** | **Duplex Mode** |
|---|---|---|---|
| | F_{UL_low} - F_{UL_high} | F_{DL_low} - F_{DL_high} | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 39500 MHz - 43500 MHz | 39500 MHz - 43500 MHz | TDD |
| n260 | 37000 MHz - 40000 MHz | 37000 MHz - 40000 MHz | TDD |
| n261 | 27500 MHz - 28350 MHz | 27500 MHz - 28350 MHz | TDD |
| n262 | 47200 MHz - 48200 MHz | 47200 MHz - 48200 MHz | TDD |
| n263 | 57000 MHz - 71000 MHz | 57000 MHz - 71000 MHz | TDD¹ |
| NOTE 1: | This band is for unlicensed operation and subject to regional and/or country specific regulatory requirements. | | |

The number of 3GPP LTE or 5G frequency bands and the level of signal improvement can vary based on a particular wireless device, cellular node, or location. Additional domestic and international frequencies can also be included to offer increased functionality. Selected models of the repeater 220 can be configured to operate with selected frequency bands based on the location of use. In another example, the repeater 220 can automatically sense from the wireless device 210 or base station 230 (or GPS, etc.) which frequencies are used, which can be a benefit for international travelers.

In one example, the repeater can be configured to transmit a downlink (DL) signal in a millimeter wave (mm Wave) frequency range, and transmit an uplink (UL) signal in a sub-6 gigahertz (GHz) frequency range. In this example, a mm Wave frequency range can be a frequency between 6 GHz and 300 GHz.

In one configuration, multiple repeaters can be used to amplify UL and DL signals. For example, a first repeater can be used to amplify UL signals and a second repeater can be used to amplify DL signals. In addition, different repeaters can be used to amplify different frequency ranges.

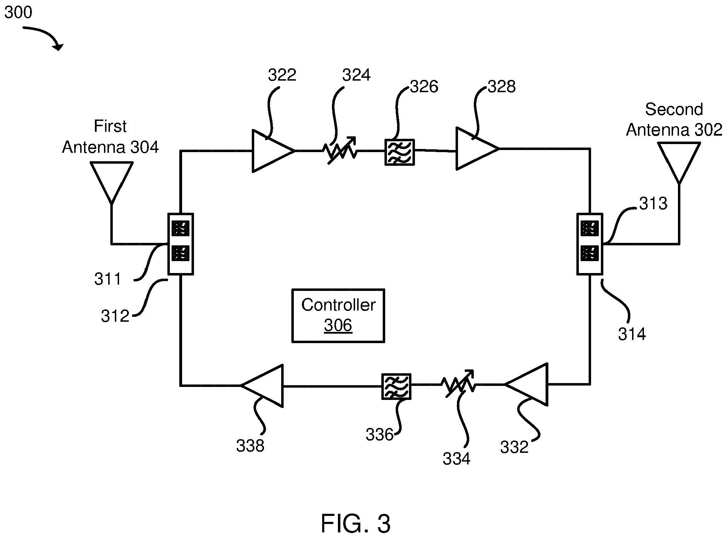

In an example, as illustrated in FIG. 3, a bi-directional full duplex frequency division duplex (FDD) repeater system can comprise a repeater 300 connected to a first antenna 304 and a second antenna 302. The repeater 300 can include a first antenna port 311 that can be internally coupled to a second duplexer (or diplexer or multiplexer or circulator or splitter) 314. The repeater 300 can include a second antenna port 313 that can also be coupled to a first duplexer (or diplexer or multiplexer or circulator or splitter) 312. Between the two duplexers, 314 and 312, can be two paths: a first-direction path and a second-direction path. The first-direction path can comprise a low noise amplifier (LNA) 322 with an input coupled to the first duplexer 312, a variable attenuator 324, such as a digital step attenuator, is coupled to an output of the LNA 322, a filter 326 coupled to the variable attenuator 324, and a power amplifier (PA) 328 coupled between the filter 326 and the second duplexer 314. The LNA 322 can amplify a lower power signal with minimal degradation of the signal to noise ratio of the signal received at the first antenna 304. The PA 328 can adjust and amplify the power level by a desired amount to output a signal with a desired power level. The second-direction path can comprise an LNA 332 with an input coupled to the second duplexer 314, a variable attenuator 334 coupled to an output of the LNA 332, a filter 336 coupled to the variable attenuator 334, and a PA 338 coupled between the filter 336 and the first duplexer 312. The first-direction path can be a downlink signal amplification path or an uplink signal amplification path. The second-direction path can be an uplink signal amplification path or a downlink signal amplification path. The repeater 300 can also comprise a controller 306. In one example, the controller 306 can include one or more processors and memory.

In some embodiments the controller 306 can adjust the gain of the first-direction path and/or the second-direction path based on wireless communication conditions. If included in the repeater 300, the controller 306 can be implemented by any suitable mechanism, such as a program, software, function, library, software as a service, analog or digital circuitry, or any combination thereof. The controller 306 can also include a processor coupled to memory. The processor can include, for example, a microprocessor, microcontroller, digital signal processor (DSP), application specific integrated circuit (ASIC), a Field Programmable Gate Array (FPGA), or any other digital or analog circuitry configured to interpret and/or to execute program instructions and/or to process data. In some embodiments, the processor can interpret and/or execute program instructions and/or process data stored in the memory. The instructions can include instructions for adjusting the gain of the first path and/or the second path. For example, the adjustments can be based on radio frequency (RF) signal inputs.

The memory can include any suitable computer readable media configured to retain program instructions and/or data for a period of time. By way of example, and not limitation, such computer readable media can include tangible computer readable storage media including random access memory (RAM), read only memory (ROM), electrically erasable programmable read only memory (EEPROM), a compact disk (CD) ROM or other optical disk storage, magnetic disk storage or other magnetic storage devices, flash memory devices (e.g., solid state memory devices) or any other storage medium which can be used to carry or store desired program code in the form of computer executable instructions or data structures and which can be accessed by a general purpose or special purpose computer. Combinations of the above can also be included within the scope of computer readable media. Computer executable instructions can include, for example, instructions and data that cause a general-purpose computer, special purpose computer, or special purpose processing device to perform a certain function or group of functions.

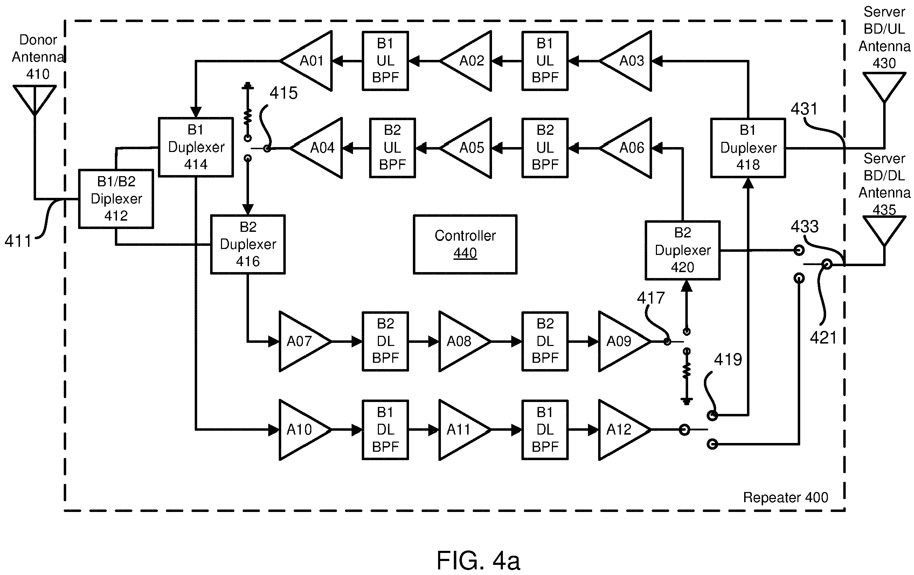

In another example, as illustrated in FIG. 4a, a repeater can be configured as a multiband bi-directional FDD wireless signal booster 400 configured to amplify multiple uplink signals and multiple downlink signal in multiple bands or channels using a separate signal path for one or more first-direction (i.e. uplink in this example) frequency bands or channels and one or more second-direction (i.e. downlink in this example) frequency bands or channels. The multiband bi-directional FDD wireless signal booster 400 can be configured to operate in both a duplex mode and a simplex mode. In one embodiment, adjacent bands can be included on a same signal path. A controller 440 can adjust the gain of each signal path based on wireless communication conditions. The controller 440 can also be used to actuate switches and control adjustable attenuators. In the example of FIG. 4a, the uplink signals are designated as first-direction signals to be carried on first-direction amplification and filtering paths, and the downlink signals are designated as second-direction signals to be carried on second-direction amplification and filtering paths for purposes of illustration. However, this is not intended to be limiting.

In one example the multiband bidirectional FDD wireless signal booster 400 illustrated in FIG. 4a can be configured to operate in a duplex mode. In the duplex mode example, a donor antenna 410 can receive downlink signals and transmit uplink signals in multiple bands. The repeater 400 can have multiple server antenna ports 431, 433. Each server antenna port can be a duplex port that can receive an uplink signal in a selected band from a wireless device and transmit a downlink signal in the selected band to the wireless device. Each of the donor antenna port 411, and the server antenna ports 431 and 433 can be configured as duplex ports.

In one example, a downlink signal can be received at a donor port antenna 410 from a base station (i.e. 230, FIG. 2). The downlink signal can be provided to a donor port 411 that is configured to be coupled to the donor port antenna 410 as a duplex port. The downlink signal can be conveyed from the donor port 411 to a first B1/B2 diplexer 412, wherein B1 represents a first frequency band and B2 represents a second frequency band. The first B1/B2 diplexer 412 can direct selected portions of a received downlink signal to a B1 downlink signal path (i.e. a first second-direction amplification and filtering path) and a B2 downlink signal path (i.e. a second second-direction amplification and filtering path). The downlink signal that is associated with B1 can travel along the B1 downlink signal path to a first B1 duplexer 414. A portion of the received signal that is within B2 can travel along the B2 downlink signal path to a first B2 duplexer 416. After passing the first B1 duplexer 414, the B1 downlink signal can travel through a series of amplifiers (e.g., A10, A11, and A12) and downlink bandpass filters (e.g., B1 DL BPF) and pass through a switch 419 ((i.e., a single-pole double-throw (SPDT) switch) that is switched to direct the B1 DL signal to a second B1 duplexer 418. In addition, the B2 downlink signal passing through the B2 duplexer 416, can travel through a series of amplifiers (e.g., A07, A08, and A09) and downlink band pass filters (e.g., B2 DL BPF) to a second B2 duplexer 420. At this point, the downlink signals (B1 or B2) have been amplified and filtered in accordance with the type of amplifiers and BPFs included in the multiband bi-directional wireless signal booster 400. The downlink signal from the second B1 duplexer 418 is provided to a B1 server port 431 that is configured as a duplex port, and passed to server antenna 430. The server antenna 430 can be configured to transmit the B1 DL signal to a wireless device such as a UE. The downlink signal from the second B2 duplexer 420 can be provided to a B2 server port that is configured as a duplex port, and passed to server antenna 435. The server antenna 435 can be configured to transmit the B2 DL signal to the wireless device.

In another example, the server antenna 430 can receive an uplink (UL) signal from a wireless device. The uplink signal can include a first frequency range, such as a Band 1 signal and a second frequency range, such as a Band 2 signal. The uplink signal can be provided to the server port 431, that is configured as a duplex port and passed to the B1 duplexer 418. The uplink signal that is associated with B2 can be received by bidirectional server antenna 435 and directed to the server port 433 that is configured as a duplex port and passed to a second B2 duplexer 420. The second B1 duplexer 418 can direct the B1 uplink signal to travel through a series of amplifiers (e.g., A01, A02, and A03) and uplink bandpass filters (B1 UL BPF) to the first B1 duplexer 414. In addition, the second B2 duplexer 420 can direct the B2 uplink signal to travel through a series of amplifiers (e.g., A04, A05, and A06) and downlink band pass filters (B2 UL BPF) and through a switch 415 (i.e., a single-pole double-throw (SPDT) switch) that is switched to direct the B2 uplink signal to the first B2 duplexer 416. At this point, the uplink signals (B1 and B2) have been amplified and filtered in accordance with the type of amplifiers and BPFs included in the bi-directional wireless signal booster 400. The uplink signals from the first B1 duplexer 414 and the first B2 duplexer 416, respectively, can be provided to the first B1/B2 diplexer 412. The first B1/B2 diplexer 412 can direct the B1 and B2 amplified uplink signals to the donor port, that is configured as a duplex port, and passed to the donor antenna 410. The donor antenna 410 can communicate the amplified uplink signals to a node, such as a base station.

In another example the multiband bidirectional FDD wireless signal booster 400 illustrated in FIG. 4a can be configured to operate in a simplex mode. In the simplex mode, the two duplex server ports 431 and 433 can be configured to be simplex server ports 431 and 433. Configuring the ports from duplex to simplex can be accomplished in several different ways. This will be discussed more fully in the proceeding paragraphs. In one embodiment, only the same server ports 431 and 433 will be used in the transition from repeater 400 operating in duplex mode to simplex mode. In order to accomplish this, the antennas coupled to the server ports 431 and 433 will only transmit or receive. Accordingly, in simplex mode, two single direction antennas are used for each band. In duplex mode, a single antenna can be used for both directions (uplink and downlink) for a selected band.

In the simplex mode example of FIG. 4a, the antenna 430 can be configured as a server uplink antenna and the antenna 435 can be configured as a server downlink antenna, or vice versa. As in the previous example, the donor antenna port 411 can remain in duplex mode, enabling the donor port 411 to operate as a duplex port and receive a downlink signal and transmit an uplink signal. For example, a downlink signal can be received at the donor antenna 410 coupled to the donor antenna duplex port 411. from the downlink signal can be received from, and the uplink signal transmitted to a base station.

The downlink signal can be provided from the donor antenna 410 to the donor antenna duplex port 411 and to a first B1/B2 diplexer 412, wherein B1 represents a first frequency band and B2 represents a second frequency band. Since the repeater 400 can only support a single band in simplex mode with two server antennas, the repeater 400 can be configured to set the server antenna 430 and 435 for either B1 or B2. In this example, B1 will be selected for simplex mode. The first B1/B2 diplexer 412 can direct selected portions of a received signal to a B1 downlink signal path and a B2 downlink signal path. A downlink signal that is associated with the B1 band can travel along the B1 downlink signal path to a first B1 duplexer 414. A portion of the received signal that is within the B2 band can travel along the B2 downlink signal path to a first B2 duplexer 416. After passing the first B1 duplexer 414, the B1 downlink signal can travel through a series of amplifiers (e.g., A10, A11, and A12) and downlink bandpass filters (e.g., B1 DL BPF) and pass through the switch 419 (i.e., a single-pole double-throw (SPDT) switch) that is switched to direct the B1 downlink signal to a second switch 421 (i.e., a single-pole double-throw (SPDT) switch). The second switch can be switched to direct the B1 DL signal to the server antenna 435 via the server port 433. In this example, the server port is configured as a simplex port for the single direction B1 DL signal.

In the simplex mode example of FIG. 4a, the B2 downlink signal passing through the B2 duplexer 416, can travel through a series of amplifiers (e.g., A07, A08, and A09) and downlink band pass filters (e.g., B2 DL BPF) to a second B2 duplexer 420. The B2 DL signal may be passed to an additional simplex server port (not shown). Alternatively, the second direction (i.e. downlink) amplification and filtering path for B2 that is coupled between the donor antenna port 411 and the server antenna port 433 can be disabled.

Disabling an amplification and filtering path can be accomplished several different ways. In one example, a switch 417 can be used to switch the path for the B2 DL signal from being directed to the second B2 duplexer 420 to being directed through a resistor to ground. The resistor can absorb the energy in the signal and minimize any reflection of the B2 DL signal back at the power amplifier A09. Alternatively, or in addition, one or more of the amplifiers A07, A08, A09 in this second direction amplification and filtering path can be turned off, or the gain can be reduced. An amplification and filtering path can also include a variable attenuator 324 (FIG. 3), such as a digital step attenuator. To disable an amplification and filtering path, the controller 440 can be used to switch the switch 417 to direct the signal through a resistor to ground, and/or decrease the gain of the amplifiers A07, A08, A09, and/or increase the attenuation in a variable attenuator.

At this point, the B1 downlink signal has been amplified and filtered in accordance with the type of amplifiers and BPFs included in the multiband bi-directional wireless signal booster 400. The B2 DL amplification and filtering path has been disabled.

The server antenna 430 can be configured to receive an uplink (UL) signal from a wireless device, such as a UE in the B1 frequency range. The B1 uplink signal can be provided to the server port 431, that is configured as a simplex port, and passed to the second B1 duplexer 418. The uplink signal that is associated with the frequency range of B2 can be received by the server antenna 435 and directed to the server port 433 and passed to a second B2 duplexer 420. The uplink signal that is associated with B1 can travel along the B1 first-direction (uplink) amplification and filtering path to a first B1 duplexer 414, and an uplink signal that is associated with B2 can travel along the B2 first-direction (uplink) amplification and filtering path to a first B2 duplexer 416. The second B1 duplexer 418 can direct the B1 uplink signal to travel through a series of amplifiers (e.g., A01, A02, and A03) and uplink bandpass filters (B1 UL BPF) in the first first-direction amplification and filtering path to the first B1 duplexer 414. In addition, the second B2 duplexer 420 can direct the B2 uplink signal to travel through a series of amplifiers (e.g., A04, A05, and A06) and downlink band pass filters (B2 UL BPF) in the second first-direction amplification and filtering path. Since the repeater 400 is configured to operate in simplex mode, the second first-direction amplification and filtering path can be disabled. The controller 440 can be used to switch the switch 415 to direct the B2 UL signal through a resistor to ground, and/or decrease the gain of the amplifiers A04, A05, A06, and/or increase the attenuation in a variable attenuator such as 324 or 334 (FIG. 3).

At this point, the uplink signal in B1 has been amplified and filtered in accordance with the type of amplifiers and BPFs included in the bi-directional wireless signal booster 400. The second first-direction amplification and filtering path for the uplink signal in B2 has been disabled. The uplink signal from the first B1 duplexer 414 can be provided to the first B1/B2 diplexer 412. The first B1/B2 diplexer 412 can direct the B1 uplink signal to the donor port 411, that is configured as a duplex port, and the B1 uplink signal can be passed to the donor antenna 410. The donor antenna 410 can communicate the amplified B1 uplink signal to a node, such as a base station.

While the example of FIG. 4a illustrates a same number of antenna ports and antennas used when the repeater 400 is configured to operate in the duplex mode as when the repeater 400 is configured to operate in the simplex mode, this is not intended to be limiting. The repeater can be configured with additional antenna ports, such as additional server antenna ports, that can be configured to be coupled to additional server antennas in the simplex mode to enable the repeater 400 to amplify and filter the same number of bands while the repeater operates in either the duplex mode or the simplex mode.

In addition, the example of FIG. 4a illustrates a repeater 400 configured for two duplex bands. Additional bands and antennas can be added to configure a repeater to amplify signals in 3 duplex bands, 4 duplex bands, 5 duplex bands, or more. In addition, the repeater of FIG. 4a can be configured to filter and amplify a selected number of duplex bands and one or more simplex bands. For instance, the repeater 400 can be configured to receive, filter, amplify, and transmit multiple duplex bands and a simplex band that only includes an uplink signal or a downlink signal.

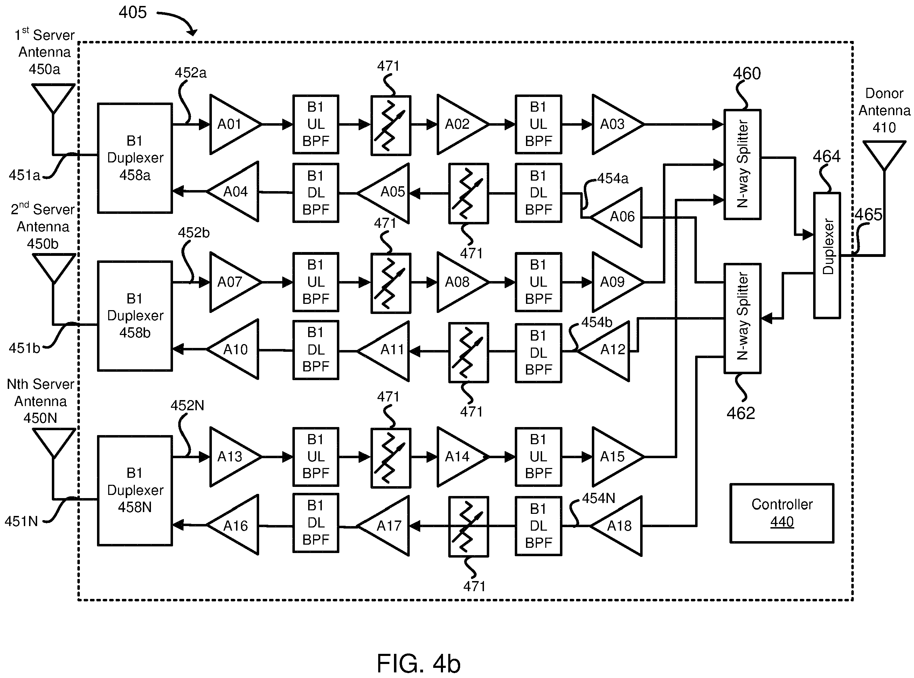

FIG. 4b provides another example of an FDD repeater 405 configured with ports that are switchable between a duplex mode and a simplex mode. In this example, the donor antenna 410 is coupled to N server antennas, 450a, 450b ... 450N. Each of the N server antennas are configured to send and receive the same signals. In this example, for purposes of simplicity, only a single band (B1) is illustrated. However, that is not intended to be limiting. Additional bands can be coupled between the server antennas and the donor antenna as further described below. In another embodiment, the antenna ports 451 a, b ... N can be configured as duplex ports and the FDD repeater 405 can be coupled to fiber optic converters that use wavelength division multiplexing to carry the duplex signals.

In the example architecture illustrated in FIG. 4b, a first N-way splitter 460 is configured to communicate all of the uplink signals carried by the uplink amplification and filtering paths 452a, 452b ... 452N coupled between the B1 duplexers 458a, 458b ... 458 N and the first N-way splitter 460. The B1 duplexers are coupled to the server antenna ports 451a, 451b ... 451N, respectively, and are configured to receive UL signals from the server antennas 450a, 450b ... 450N.

In the example architecture illustrated in FIG. 4b, a second N-way splitter 462 is configured to communicate all of the downlink signals carried by the downlink amplification and filtering paths 454a, 454b ... 454N coupled between the B1 duplexers 458a, 458b ... 458 N and the second N-way splitter 462. The first N-way splitter 460 and the second N-way splitter 462 are coupled to a second duplexer 464 that is coupled to a donor antenna port 465. While the amplification, filtering and attenuation is shown in this example as being located independently on each amplification and filtering path between the duplexer 458 a, b ... N and the N-way splitters 460, 462, this is not intended to be limiting. The amplification, filtering, and/or attenuation can be moved, or additional amplification, filtering and amplification can be located between the N-way splitters 460, 462 and the duplexer 464. Locating the amplification, filtering, and attenuation between the N-way splitters 460, 462 and the duplexer 464 has the added benefit that the components do not have to be separately duplicated N times for each of the N UL and DL amplification and filtering paths.

As previously discussed, an amplification and filtering path can be disabled using a controller 440 to direct the signal through a resistor to ground, as shown in FIG. 4a, and/or decrease the gain of the amplifiers A01 - A18 and/or increase the attenuation in a variable attenuator 471. Disabling one or more of the UL paths 452 a, b ... N or one or more of the DL paths 454a, b ... N enables the other DL path or UL path coupled to the B1 Duplexers 458a, b ... N to be a simplex path at the server antenna port 451a, b ... N, respectively. In addition, the B1 duplexers 458a, b ... N can be replaced with switches that can be used to switch either the UL amplification and filtering paths 452 a, b ... N or the DL amplification and filtering paths 454 a, b ... N to the server antenna ports 451a, b, ... N. The filtering paths 454 a, b ... N and 42 a, b...N can also be referred to as downlink paths, and uplink paths, respectively. When both of the uplink path 452 a, b ... N and downlink paths 454a, b ... N are enabled at the B1 duplexers 458a, b ... N it enables the server antenna ports 451 a, b ... N to be configured as duplex ports that configures the multiband FDD repeater 405 in FIG. 4b to be used as the repeater in FIG. 1a. When one of the uplink path 452a, b ... N and downlink path 454 a, b ... N are disabled at the B1 duplexers 458a, b ... N it enables the server antenna ports 451 a, b ... N to be configured as simplex ports, that communicate either an uplink signal or a downlink signal, which configures the multiband FDD repeater 405 in FIG. 4b to be used in a simplex mode as the repeater in FIG. 1b.

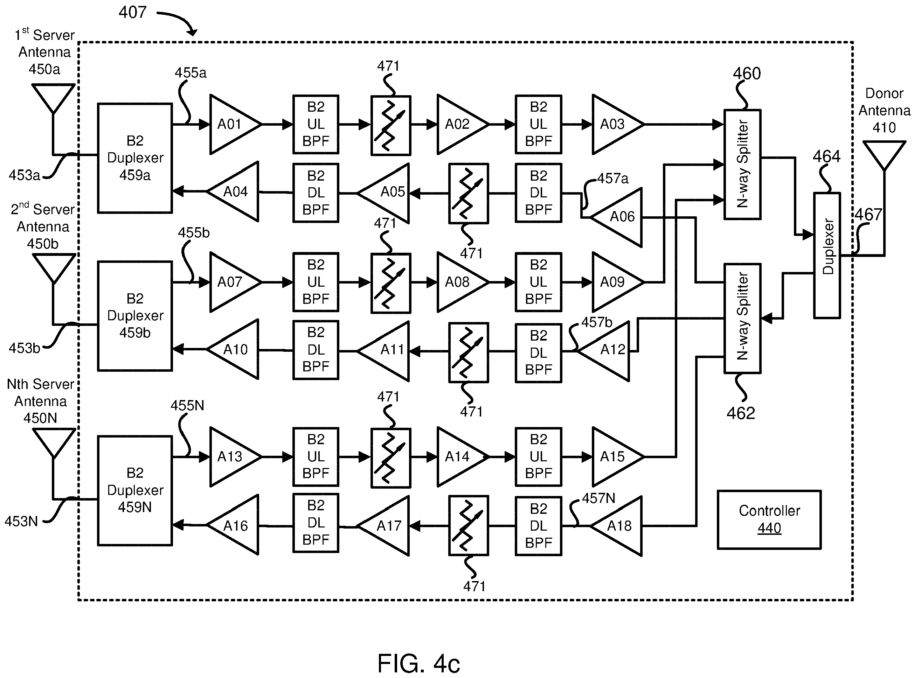

FIG. 4c provides another example of an FDD repeater 407 configured with ports that are switchable between a duplex mode and a simplex mode. As in the previous example, the donor antenna 410 is coupled to N server antennas, 450a, 450b ... 450N. Each of the N server antennas is configured to send and receive the same signals. In this example, for purposes of simplicity, only a single band (B2) is illustrated. Band 1 (in FIG. 4b) and Band 2 (in FIG. 4c) are used as generic band names and are not intended to refer to specific bands in the 3GPP context. B1, as used in the examples of FIG. 4a-4c can be any 3GPP FDD band, and B2 can be any 3GPP FDD band. In another embodiment, the antenna ports 453 a, b ... N can be configured as duplex ports and the FDD repeater 407 can be coupled to fiber optic converters that use wavelength division multiplexing to carry the duplex signals.

In the example architecture illustrated in FIG. 4c, a first N-way splitter 460 is configured to communicate all of the B2 uplink signals carried by the uplink amplification and filtering paths 455a, 455b ... 455N coupled between the B1 duplexers 459a, 459b ... 459N and the first N-way splitter 460. The B1 duplexers are coupled to the server antenna ports 453a, 453b ... 453N, respectively, and are configured to receive UL signals from the server antennas 450a, 450b ... 450N.

In the example architecture illustrated in FIG. 4c, a second N-way splitter 462 is configured to communicate all of the downlink signals carried by the downlink amplification and filtering paths 457a, 457b ... 457N coupled between the B1 duplexers 458a, 458b ... 458 N and the second N-way splitter 462. The first N-way splitter 460 and the second N-way splitter 462 are coupled to a second duplexer 464 that is coupled to a donor antenna port 467. While the amplification, filtering and attenuation is shown in the example of FIG. 4c as being located independently on each amplification and filtering path between the duplexer 459 a, b ... N and the N-way splitters 460, 462, this is not intended to be limiting. The amplification, filtering, and/or attenuation can be moved, or additional amplification, filtering and amplification can be located between the N-way splitters 460, 462 and the duplexer 464.

As previously discussed, an amplification and filtering path can be disabled using a controller 440 to direct the signal through a resistor to ground, as shown in FIG. 4a, and/or decrease the gain of the amplifiers A01 - A18 and/or increase the attenuation in a variable attenuator 471. Disabling one or more of the UL paths 455 a, b ... N or one or more of the DL paths 457a, b ... N enables the other of the DL path or the UL path coupled to the B1 Duplexers 459a, b ... N to be a simplex path at the server antenna port 453a, b ... N, respectively. In addition, the B2 duplexers 459a, b ... N can be replaced with switches that can be used to switch either the UL amplification and filtering paths 455 a, b ... N or the DL amplification and filtering paths 457 a, b ... N to the server antenna ports 453a, b, ... N. When both of the uplink path 455 a, b ... N and downlink paths 457a, b ... N are enabled at the B2 duplexers 459a, b ... N it enables the server antenna ports 453 a, b ... N to be configured as duplex ports that configures the multiband FDD repeater 407 in FIG. 4c to be used as the repeater in FIG. 1a. When one of the uplink path 455a, b ... N and downlink path 457 a, b ... N are disabled at the B2 duplexers 459a, b ... N it enables the server antenna ports 453 a, b ... N to be configured as simplex ports, that communicate either an uplink signal or a downlink signal, which configures the multiband FDD repeater 407 in FIG. 4b to be in a simplex mode and can be used as the repeater in FIG. 1b.

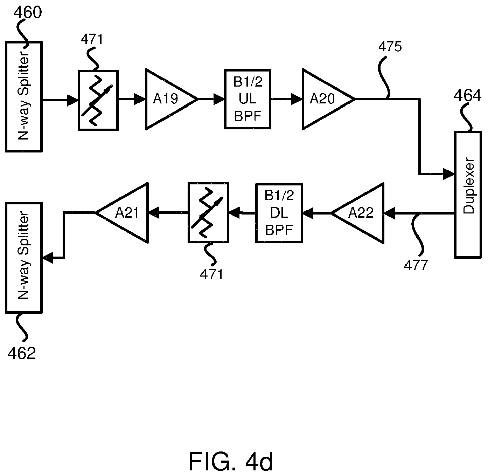

For example, FIG. 4d provides an example illustration of an uplink amplification and filtering path 475 coupled between the first N-way splitter 460, and the duplexer 464 and a downlink amplification and filtering path 477 coupled between the duplexer 464 and the second N-way splitter 462. The uplink amplification and filtering path 475 can include one or more amplifiers A19, A20, including a low noise amplifier (LNA), a variable attenuator 471, and one or more UL filters for a selected band, such as B1 or B2. Similarly, the downlink amplification and filtering path 477 can include one or more amplifiers A21, A22, that can include a power amplifier (PA), a variable attenuator 471, and one or more DL filters for a selected band, such as B1 or B2. Locating the amplification, filtering, and attenuation between the N-way splitters 460, 462 and the duplexer 464 has the added benefit that the components do not have to be separately duplicated N times for each of the N UL and DL amplification and filtering paths for each band. In addition, the uplink amplification and filtering path 475 or the downlink amplification and filtering path 477 can be disabled using a controller 440 (FIG. 4a-4c) to direct the signal through a resistor to ground, as shown in FIG. 4a, and/or decrease the gain of the amplifiers A19-A21 and/or increase the attenuation in a variable attenuator 471. Disabling the uplink amplification and filtering path 475 or the downlink amplification and filtering path 477 can disable all of the UL paths or DL paths, as illustrated in FIGs. 4b and 4c, for a selected band. Alternatively, selected UL paths or DL paths can be disabled individually, as previously discussed.

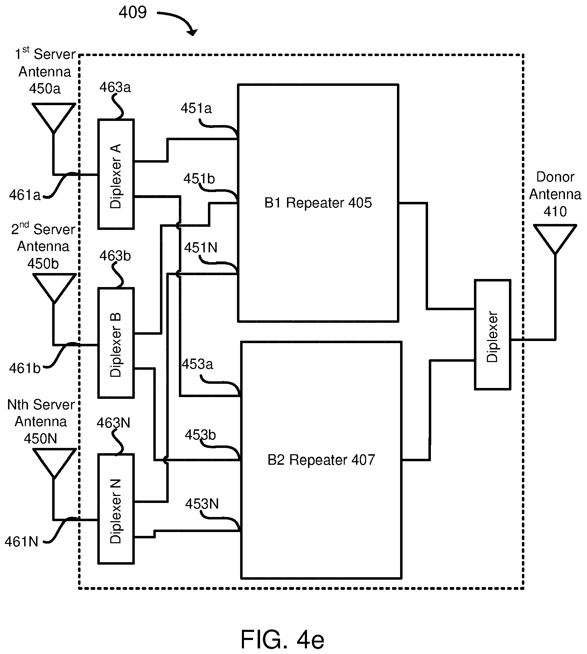

FIG. 4e provides an example illustration showing an embodiment in which the B1 repeater of FIG. 4b and the B2 repeater of FIG. 4c can be combined to form a multiband FDD repeater 409 configured with ports that are switchable between a duplex mode and a simplex mode. In this example, N diplexers, in conjunction with the duplexers of FIGs. 4b and 4c, are used to route the duplex B1 signals and the duplex B2 signals at the server antenna ports 461 a, b ... N to the B1 UL or DL amplification and filtering paths 452 a, b ... N or 454a, b ... N or the B2 UL or DL amplification and filtering paths 455 a, b ... N or 457 a, b ... N to operate the multiband FDD repeater 409 in a duplex mode with duplex ports that can communicate both uplink signals and downlink signals.

Third, fourth, fifth and more bands can be similarly added using additional duplexers and diplexers, as can be appreciated. The architecture illustrated in FIGs. 4b-4e enables each of the server antenna ports 461a, 461b ... 461N to carry each of the UL and DL signals of each of the bands. Accordingly, each of the server antenna ports 461a, 461b ... 461 N can be configured as duplex ports configured to carry the UL and DL signals of each band.

In addition, the repeaters 405 and 407, illustrated in the examples of FIG. 4b and 4c, can configure each server antenna port 451a, 451b ... 451 N and 453a, 453b ... 453 N, respectively, as simplex ports that carry either an UL signal, or a DL signal to operate the repeater 405, 407, and/or 409 in a simplex mode with one or more simplex port(s). As previously discussed, an amplification and filtering path can be disabled using a controller 440 to direct the signal through a resistor to ground, as shown in FIG. 4a, and/or decrease the gain of the amplifiers A01 - A18 and/or increase the attenuation in a variable attenuator 471. In addition, the B1 duplexers 458a, b ... N and B2 duplexers 459a, b ... N can be replaced with switches that can be used to switch either the UL amplification and filtering paths or the DL amplification and filtering paths to the server antenna ports 451a, b, ... N and 453 a, b ... N. This enables the server antenna ports 461 a, b ... N to be configured as duplex ports that configures the multiband FDD repeater 409 in FIG. 4e to be used as the repeater in FIG. 1a. Or the server antenna ports 461 a, b ... N can be configured as simplex ports, that communicate either an uplink signal or a downlink signal, which configures the multiband FDD repeater 409 in FIG. 4e to be used as the repeater in FIG. 1b. In another embodiment, the antenna ports 461 a, b ... N can be configured as duplex ports that can communicate both uplink signals and downlink signals to enable the multiband repeater to be coupled to fiber optic converters that use wavelength division multiplexing to carry the duplex signals.

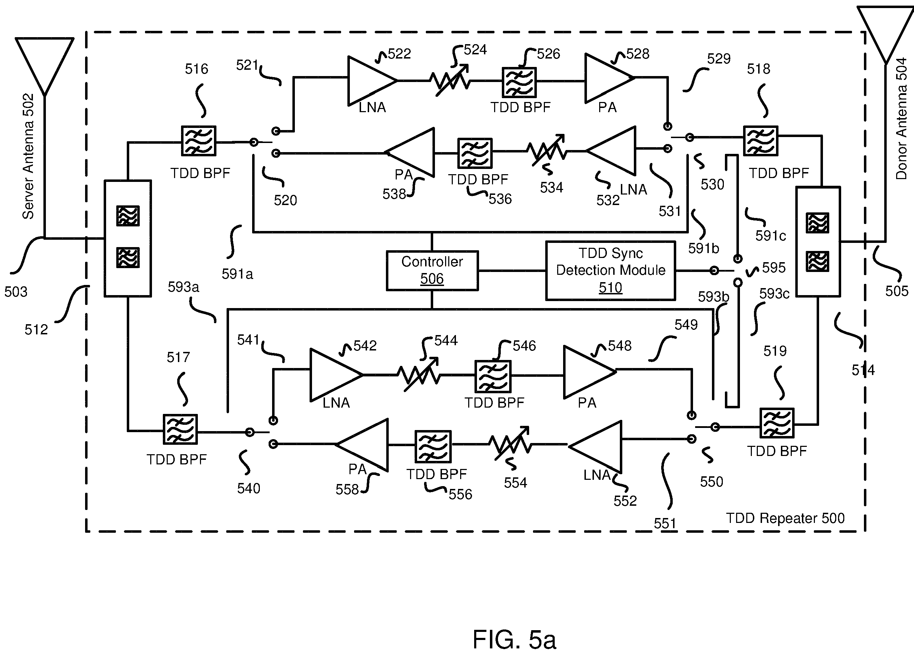

In another example, as illustrated in FIG. 5a, a repeater can be configured to receive, filter, amplify, and transmit a time division duplex (TDD) signal. The repeater is referred to as a TDD repeater. FIG. 5a provides an example illustration of a TDD repeater 500 that is configured to operate in a duplex mode with a donor port that is a duplex port and a server port that is a duplex port. The repeater can be configured to be coupled to a first antenna (e.g., a server antenna) 502 and a second antenna (e.g., a donor antenna) 504. The first antenna 502 can receive a first-direction signal (e.g., an uplink signal) from a wireless device (e.g., a UE). The first antenna 502 can be configured to be coupled to a first port (e.g., a server port) 503. The first port 503 can be coupled to a multiplexer (or a diplexer, a duplexer, a circulator, or a splitter) 512. The first-direction signal received at the first antenna 502 from the wireless device can be directed to multiplexer 512. The multiplexer 512 can direct the TDD first-direction signal, based on its frequency, to a TDD first path or a TDD second path.

In another example, the second antenna 504 can receive a second-direction signal from a base station. The second antenna 504 can be coupled to a second port (e.g., a donor port) 505. The second port 505 can be coupled to a multiplexer (or a diplexer, a duplexer, a circulator, or a splitter) 514. The second-direction signal received at the second antenna 504 from the base station can be directed to multiplexer 514. The multiplexer 514 can direct the TDD second-direction signal, based on its frequency, to a TDD first path or a TDD second path.

In another example, the TDD first path can comprise a filter (e.g., a TDD band-pass filter (BPF)) 516 that is configured to be coupled to the multiplexer 512 and a filter (e.g., a TDD BPF) 518 that is configured to be coupled to the multiplexer 514. The filter 516 can be configured to be coupled to a first switch 520 (e.g., a single-pole double-throw (SPDT) switch). The first switch 520 can be configured to be coupled to a first-direction path 521 of the TDD first path and a second-direction path 539 of the TDD first path. The filter 518 can be configured to be coupled to a second switch 530 (e.g., a single-pole double-throw (SPDT) switch). The second switch 530 can be configured to be coupled to a second-direction path 531 of the TDD first path and a first-direction path 529 of the TDD first path.

In another example, the first-direction path of the TDD first path can comprise one or more of a low-noise amplifier (LNA) 522, a variable attenuator 524, a filter (e.g., a TDD band-pass filter (BPF)) 526, or a power amplifier 528. In another example, the power amplifier 528 can comprise a variable gain power amplifier, a fixed gain power amplifier, or a gain block.

In another example, the filter 526 can be configured to pass one or more of a first-direction (e.g., an uplink direction) of a first frequency range (e.g., one or more of 3GPP E-UTRA TDD frequency bands 41, 48, or 49). In another example, the filter 526 can be configured to communicate one or more of a first-direction of 3GPP E-UTRA TDD frequency bands 33 through 54 or 3GPP 5G TDD frequency bands n34, n38-n41, n46-48, n50-n53, n77-n79, n90, n96, n101, n102, or n104 in Frequency Range 1 (FR1) or 3GPP 5G TDD frequency bands n257-n263 in Frequency Range 2 (FR2). In another example, the filter 526 can be configured to communicate a first-direction of a selected channel within a 3GPP LTE TDD band or a 3GPP 5G TDD frequency band. In another example, the filter 526 can be configured to communicate a first-direction of a selected frequency range within a 3GPP LTE TDD frequency range or a first-direction of a 3GPP 5G TDD frequency range.

In another example, after being directed along the TDD first-direction path of the TDD first path, the TDD first-direction signal can be amplified and filtered in accordance with the type of amplifiers and filters included along the TDD first-direction path. At this point, the TDD first-direction signal can be directed to the second switch 530. The second switch 530 can direct the TDD first-direction signal to the filter (e.g., a TDD BPF) 518. The filter 518 can direct the TDD first-direction signal to the multiplexer 514. The multiplexer 514 can be coupled to the second port 505. The TDD first-direction signal can be directed from the multiplexer 514 to the second port 505. The TDD first-direction signal can be directed from the second port 505 to the second antenna 504. The second antenna 504 can communicate the amplified and/or filtered TDD first-direction signal to a base station.

In another example, the second antenna 504 can receive a second-direction signal from a base station. The second port 505 can be configured to be coupled to the second antenna 504. The second port 505 can be coupled to the multiplexer 514. The second-direction signal received at the second antenna 504 from the base station can be directed to the multiplexer 514. The multiplexer 514 can direct the TDD second-direction signal, based on its frequency, to the second switch (e.g., a SPDT switch) 530.

In another example, the second-direction path 531 of the TDD first path can comprise one or more of a low-noise amplifier (LNA) 532, a variable attenuator 534, a filter (e.g., a TDD BPF) 536, or a power amplifier 538. In another example, the power amplifier 538 can comprise a variable gain power amplifier, a fixed gain power amplifier, or a gain block.

In another example, the filter 536 can be configured to pass one or more of a second-direction (e.g., a downlink direction) of a first frequency range (e.g., one or more of 3GPP E-UTRATDD frequency bands 41, 48, or 49). In another example, the filter 526 can be configured to communicate one or more of a first-direction of 3GPP E-UTRA TDD frequency bands 33 through 54 or 3GPP 5G TDD frequency bands n34, n38-n41, n46-48, n50-n53, n77-n79, n90, n96, n101, n102, or n104 in Frequency Range 1 (FR1) or 3GPP 5G TDD frequency bands n257-n263 in Frequency Range 2 (FR2). In another example, the filter 526 can be configured to communicate a first-direction of a selected channel within a 3GPP LTE TDD band or a 3GPP 5G TDD frequency band. In another example, the filter 526 can be configured to communicate a first-direction of a selected frequency range within a 3GPP LTE TDD frequency range or a first-direction of a 3GPP 5G TDD frequency range.

In another example, after being directed along the second-direction path of the TDD first path, the TDD second-direction signal can be amplified and filtered in accordance with the type of amplifiers and filters included along the TDD second-direction path. At this point, the TDD second-direction signal can be directed to the first switch (e.g., a SPDT switch) 520. The first switch 520 can direct the amplified and/or filtered TDD second-direction signal to the multiplexer 512. The multiplexer 512 can be coupled to a first port 503. The TDD second-direction signal can be directed from the multiplexer 512 to the first port 503. The TDD second-direction signal can be directed from the first port 503 to the first antenna 502. The first antenna 502 can communicate the amplified and/or filtered TDD second-direction signal to a wireless device.

In another example, the TDD second path can comprise a filter (e.g., a TDD band-pass filter (BPF)) 517 that is configured to be coupled to the multiplexer 512 and a filter (e.g., a TDD BPF) 519 that is configured to be coupled to the multiplexer 514. The filter 517 can be configured to be coupled to a third switch 540 (e.g., a single-pole double-throw (SPDT) switch). The third switch 540 can be configured to be coupled to a first-direction path 541 of the TDD second path and a second-direction path 551 of the TDD second path. The filter 517 can be configured to be coupled to a fourth switch 550 (e.g., a single-pole double-throw (SPDT) switch). The fourth switch 550 can be configured to be coupled to a second-direction path 551 of the TDD second path and a first-direction path 549 of the TDD second path.

In another example, the first-direction path of the TDD second path can comprise one or more of a low-noise amplifier (LNA) 542, a variable attenuator 544, a filter (e.g., a TDD band-pass filter (BPF)) 546, or a power amplifier 548. In another example, the power amplifier 548 can comprise a variable gain power amplifier, a fixed gain power amplifier, or a gain block.

In another example, the filter 546 can be configured to pass one or more of a first-direction (e.g., an uplink direction) of a second frequency range (e.g., one or more of 3GPP E-UTRATDD frequency bands 41, 48, or 49). In another example, the filter 526 can be configured to communicate one or more of a first-direction of 3GPP E-UTRA TDD frequency bands 33 through 54 or 3GPP 5G TDD frequency bands n34, n38-n41, n46-48, n50-n53, n77-n79, n90, n96, n101, n102, or n104 in Frequency Range 1 (FR1) or 3GPP 5G TDD frequency bands n257-n263 in Frequency Range 2 (FR2). In another example, the filter 526 can be configured to communicate a first-direction of a selected channel within a 3GPP LTE TDD band or a 3GPP 5G TDD frequency band. In another example, the filter 526 can be configured to communicate a first-direction of a selected frequency range within a 3GPP LTE TDD frequency range or a first-direction of a 3GPP 5G TDD frequency range.

In another example, after being directed along the TDD first-direction path 549 of the TDD second path, the TDD first-direction signal can be amplified and filtered in accordance with the type of amplifiers and filters included along the TDD first-direction path. At this point, the TDD first-direction signal can be directed to the fourth switch 550. The fourth switch 550 can direct the TDD first-direction signal to the filter (e.g., a TDD BPF) 519. The filter 519 can direct the TDD first-direction signal to the multiplexer 514. The multiplexer 514 can be coupled to the second port 505. The TDD first-direction signal can be directed from the multiplexer 514 to the second port 505. The TDD first-direction signal can be directed from the second port 505 to the second antenna 504. The second antenna 504 can communicate the amplified and/or filtered TDD first-direction signal to a base station.

In another example, the second antenna 504 can receive a second-direction signal from a base station. The second port 505 can be configured to be coupled to the second antenna 504. The second port 505 can be coupled to the multiplexer 514. The second-direction signal received at the second antenna 504 from the base station can be directed to the multiplexer 514. The multiplexer 514 can direct the TDD second-direction signal, based on its frequency, to the fourth switch (e.g., a SPDT switch) 550.

In another example, the second-direction path 551 of the TDD can comprise one or more of a low-noise amplifier (LNA) 552, a variable attenuator 554, a filter (e.g., a TDD BPF) 556, or a power amplifier 558. In another example, the power amplifier 558 can comprise a variable gain power amplifier, a fixed gain power amplifier, or a gain block.

In another example, the filter 556 can be configured to pass one or more of a second-direction (e.g., one or more of 3GPP E-UTRA TDD frequency bands 41, 48, or 49). In another example, the filter 526 can be configured to communicate one or more of a first-direction of 3GPP E-UTRATDD frequency bands 33 through 54 or 3GPP 5G TDD frequency bands n34, n38-n41, n46-48, n50-n53, n77-n79, n90, n96, n101, n102, or n104 in Frequency Range 1 (FR1) or 3GPP 5G TDD frequency bands n257-n263 in Frequency Range 2 (FR2). In another example, the filter 526 can be configured to communicate a first-direction of a selected channel within a 3GPP LTE TDD band or a 3GPP 5G TDD frequency band. In another example, the filter 526 can be configured to communicate a first-direction of a selected frequency range within a 3GPP LTE TDD frequency range or a first-direction of a 3GPP 5G TDD frequency range.

In another example, after being directed along the second-direction path of the TDD second path, the TDD second-direction signal can be amplified and filtered in accordance with the type of amplifiers and filters included along the TDD second-direction path. At this point, the TDD second-direction signal can be directed to the third switch (e.g., a SPDT switch) 540. The third switch 540 can direct the amplified and/or filtered TDD second-direction signal to the multiplexer 512. The multiplexer 512 can be coupled to the first port 503. The TDD second-direction signal can be directed from the multiplexer 512 to the first port 503. The TDD second-direction signal can be directed from the first port 503 to the first antenna 502. The first antenna 502 can communicate the amplified and/or filtered TDD second-direction signal to a wireless device.

In another example, a repeater can further comprise a single TDD sync detection module (TDD SDM) 510. The TDD SDM 510 can be configured to determine UL/DL configuration information for a first TDD signal and a second TDD signal. The UL/DL configuration information may be received at a different location within the repeater and communicated to the TDD SDM 510. The TDD SDM can be configured to detect UL/DL configuration information for the first TDD signal using one or more detectors 591c and for the second TDD signal using one or more detectors 593c. The one or more detectors 591c can be located between the filter 518 and the switch 595. The one or more detectors 593c can be located between the filter 519 and the switch 595.

In another example, the TDD SDM 510 can be configured to determine the UUDL configuration information for the first TDD signal and the UL/DL configuration information for the second TDD signal in a same time period. In another example, the TDD SDM 510 can be configured to determine the UL/DL configuration information for the first TDD signal in a first time period and determine the UL/DL configuration information for the second TDD signal in a second time period, wherein the first time period does not overlap with the second time period.

In another example, the TDD SDM 510 can be configured to store the UL/DL configuration information for the first TDD signal or store the UL/DL configuration information for the second TDD signal. The TDD SDM 510 can be configured to use the UL/DL configuration information for the first TDD signal that is stored at the TDM SDM to reacquire UL/DL configuration information for the first TDD signal in a first subsequent time period, and use the UL/DL configuration information for the second TDD signal that is stored at the TDM SDM to reacquire UL/DL configuration information for the second TDD signal in a second subsequent time period.

In another example, a controller 506 can be configured to switch the first switch 520 via 591a to pass a first-direction TDD signal (e.g., an uplink TDD signal) from the filter 516 to the TDD first-direction path 521 of the first path and switch the second switch 530 to pass the first-direction TDD signal to the second port 505 via the filter 518. In another example, the controller 506 can be configured to switch the second switch 530 via 591b to pass a second-direction signal (e.g., a downlink TDD signal) from the second port 505 to the TDD second-direction path 531 and switch the first switch 520 to pass the second-direction TDD signal to the first port 503 via the filter 516.

In another example, a controller 506 can be configured to switch the third switch 540 via 593a to pass a first-direction TDD signal (e.g., an uplink TDD signal) from the filter 517 to the TDD first-direction path 541 of the second path and switch the fourth switch 550 to pass the first-direction TDD signal to the second port 505 via the filter 519. In another example, the controller 506 can be configured to switch the fourth switch 550 via 593b to pass a second-direction signal (e.g., a downlink TDD signal) from the second port 505 to the TDD second-direction path 551 and switch the third switch 540 to pass the second-direction TDD signal to the first port 503 via the filter 517.

In another example, the single TDD SDM 510 or the controller can comprise one or more of a modem, a field-programmable gate array (FPGA), or an application-specific integrated circuit (ASIC) that is configured to receive UL/DL configuration information from a base station or a UE and send a signal to a switch. The TDD SDM 510 can be configured to switch between a DL configuration and an UL configuration in a 1 millisecond (ms) subframe basis for 3GPP LTE. The TDD switch controller can be configured to switch between a DL configuration and an UL configuration on a symbol basis for 3GPP 5G, wherein the duration of a symbol can vary based on numerology.

In another example, the controller 506 can be configured to use the UL/DL configuration information for the first TDD signal to switch between the TDD first-direction signal of the first TDD signal and the TDD second-direction signal of the first TDD signal for the TDD first path. The controller 506 can be configured to use the UL/DL configuration information for the second TDD signal to switch between the second TDD first-direction signal of the second TDD signal and the second TDD second-direction signal of the second TDD signal for the TDD second path.

In another example, the TDD SDM 510 can be configured to receive synchronization information for the first TDD signal to enable the controller to switch between the first TDD first-direction signal and the first TDD second-direction signal, and receive synchronization information for the second TDD signal to enable the controller to switch between the second TDD first-direction signal and the second TDD second-direction signal. The synchronization information for the first TDD signal can be received from a base station transmitting the first TDD second-direction signal. The synchronization information for the second TDD signal can be received from a base station transmitting the second TDD second-direction signal.

In another example, the controller 506 can be configured to use the synchronization information for the first TDD signal and the UL/DL configuration information for the first TDD signal to switch between the first TDD first-direction signal and the first TDD second-direction signal for a subsequent time period. The controller 506 can be configured to use the synchronization information for the second TDD signal and the UL/DL configuration information for the second TDD signal to switch between the second TDD first-direction signal and the second TDD second-direction signal for a subsequent time period. In another example, the controller 506 can be configured to store the synchronization information for the first TDD signal or store the synchronization information for the second TDD signal.

In another example, the TDD SDM can be configured to use the synchronization information for the first TDD signal that is stored at the controller to reacquire synchronization information for the first TDD signal in a first subsequent time period or use the synchronization information for the second TDD signal that is stored at the controller to reacquire synchronization information for the second TDD signal in a second subsequent time period.

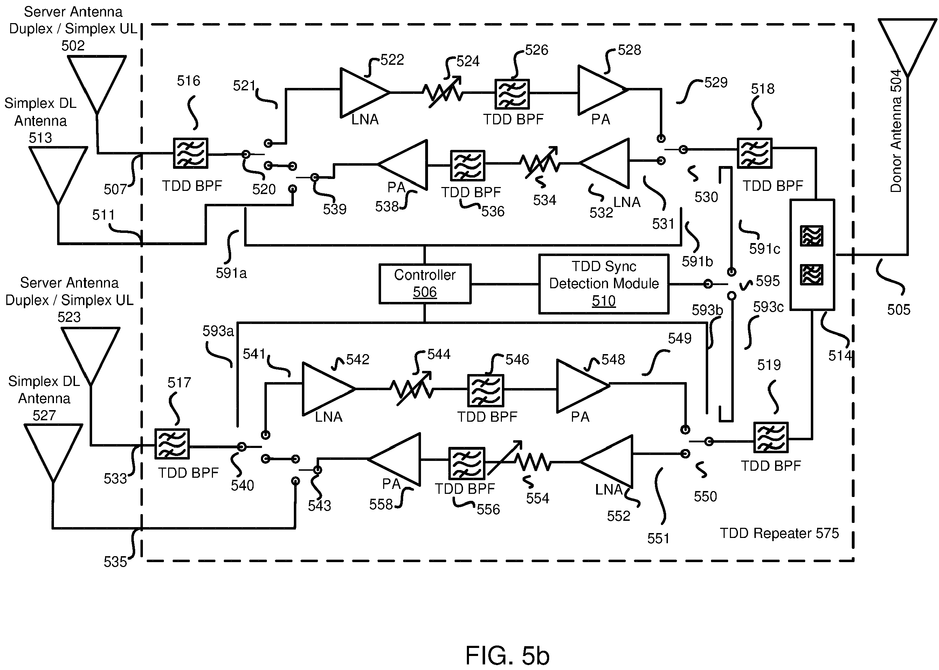

FIG. 5b illustrates an example of a TDD repeater 575 that is configured to switch between a duplex mode and a simplex mode. In the duplex mode, the TDD repeater 575 can be configured to operate similarly to the TDD repeater 500 of FIG. 5a. The donor antenna 504 can receive downlink signals and transmit uplink signals in multiple bands. The repeater 575 can have two or more server antenna ports. In this example, server antenna ports 507 and 533 can be switched to be duplex ports or simplex ports. Server antenna ports 511 and 535 can be simplex ports that can be used to send a single-direction signal (i.e. an UL signal or a DL signal) when the TDD repeater 575 is configured to operate in a simplex mode. The server antenna ports 507 and 533 can each be a duplex port that can receive an uplink signal in a selected band from a wireless device and transmit a downlink signal in the selected band to the wireless device.

In the example of FIG. 5b, the TDD repeater can be switched from a duplex mode to a simplex mode using switches 539 and 543. Switch 543 (e.g., a SPDT switch) can be switched to direct the output of the TDD DL signal from the power amplifier 558 in the second-direction path 551 of the TDD second path to the server simplex port 535. The TDD DL signal can be directed from the server simplex port 535 to a simplex DL antenna 527 that is configured to transmit the TDD DL signal to a UE. Switch 540 can be switched to direct a TDD UL signal received at the server antenna simplex UL antenna 523 to the server simplex port 533. The TDD UL signal can be filtered using the TDD BPF 517 and directed to the first-direction path 541 of the TDD second path for amplification and filtering, as previously discussed with respect to FIG. 5a. Accordingly, in the simplex mode, the TDD repeater 575 can transmit a simplex DL signal from simplex port 535 and receive a simplex UL signal at simplex port 533.

Similarly, switch 539 (e.g., a SPDT switch) can be switched to direct the output of the TDD DL signal from the power amplifier 538 in the second-direction path 531 of the TDD first path to the server simplex port 511. The TDD DL signal can be directed from the server simplex port 511 to a simplex DL antenna 513 that is configured to transmit the TDD DL signal to a UE. Switch 520 can be switched to direct a TDD UL signal received at the server simplex UL antenna 502 to the server simplex port 507. The TDD UL signal can be filtered using the TDD BPF 516 and directed to the first-direction path 521 of the TDD first path for amplification and filtering, as previously discussed with respect to FIG. 5a. Accordingly, in the simplex mode, the TDD repeater 575 can transmit a simplex DL signal from simplex port 511 and receive a simplex UL signal at simplex port 507. This enables the TDD repeater 575 to be used in a duplex mode as the repeater in FIG. 1a, or to be used in a simplex mode as the repeater in FIG. 1b. In another embodiment, the TDD repeater 575 can be used in a duplex mode with a fiber optic repeater that is configured to use WDM to send both the TDD UL signal and the TDD DL signal from a duplex port at different wavelengths, as previously discussed.

In the example of FIG. 5b, the TDD repeater can be switched from a simplex mode to a duplex mode using switches 539 and 543. Switch 543 can be switched to direct the output of the TDD DL signal from the power amplifier 558 in the second-direction path 551 of the TDD second path to the TDD BPF for filtering, and then to the server duplex port 533. The TDD DL signal can be directed from the server duplex port 533 to a server duplex antenna 523 that is configured to transmit the TDD DL signal to a UE. The server duplex antenna 523 can also receive an UL signal from the UE. Switch 540 can be switched to direct a TDD UL signal received at the server duplex antenna 523 to the TDD BPF 517 and directed to the first-direction path 541 of the TDD second path for amplification and filtering, as previously discussed with respect to FIG. 5a. Accordingly, in the duplex mode, the TDD repeater 575 can both transmit DL signals from and receive UL signals at the server duplex port 533 for communication to and from the server duplex antenna 523.

Similarly, switch 539 can be switched to direct the output of the TDD DL signal from the power amplifier 538 in the second-direction path 531 of the TDD first path to the server antenna duplex port 507. The TDD DL signal can be directed from the server duplex port 507 to a server duplex antenna 502 that is configured to transmit the TDD DL signal to a UE. Switch 520 can be switched to direct a TDD UL signal received at the server duplex antenna 502 to the server duplex port 507. The TDD UL signal can be filtered using the TDD BPF 516 and directed to the first-direction path 521 of the TDD first path for amplification and filtering, as previously discussed with respect to FIG. 5a. Accordingly, in the duplex mode, the TDD repeater 575 can transmit a DL signal from duplex port 507 and receive an UL signal at duplex port 507.

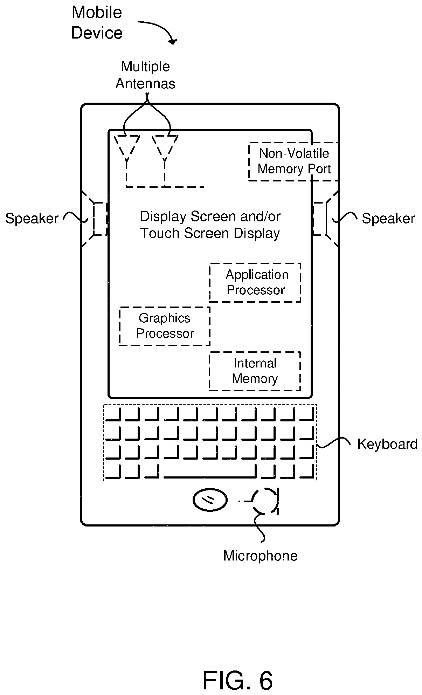

FIG. 6 provides an example illustration of the wireless device, such as a user equipment (UE), a mobile station (MS), a mobile communication device, a tablet, a handset, a wireless transceiver coupled to a processor, or other type of wireless device. The wireless device can include one or more antennas configured to communicate with a node or transmission station, such as an access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The wireless device can communicate using separate antennas for each wireless communication standard or shared antennas for multiple wireless communication standards. The wireless device can communicate in a wireless local area network (WLAN), a wireless personal area network (WPAN), and/or a WWAN.

FIG. 6 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be with the wireless device or wirelessly connected to the wireless device to provide additional user input. A virtual keyboard can also be provided using the touch screen.

Various techniques, or certain aspects or portions thereof, can take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a random-access memory (RAM), erasable programmable read only memory (EPROM), flash drive, optical drive, magnetic hard drive, solid state drive, or other medium for storing electronic data. The low energy fixed location node, wireless device, and location server can also include a transceiver module (i.e., transceiver), a counter module (i.e., counter), a processing module (i.e., processor), and/or a clock module (i.e., clock) or timer module (i.e., timer). One or more programs that can implement or utilize the various techniques described herein can use an application programming interface (API), reusable controls, and the like. Such programs can be implemented in a high level procedural or object-oriented programming language to communicate with a computer system. However, the program(s) can be implemented in assembly or machine language, if desired. In any case, the language can be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module can be implemented as a hardware circuit comprising custom very-large-scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits or multiple processors can be used to implement the functional units described in this specification. For example, a first hardware circuit or a first processor can be used to perform processing operations and a second hardware circuit or a second processor (e.g., a transceiver or a baseband processor) can be used to communicate with other entities. The first hardware circuit and the second hardware circuit can be incorporated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

Reference throughout this specification to "an example" or "exemplary" means that a particular feature, structure, or characteristic described in connection with the example is included in at least one embodiment of the present invention. Thus, appearances of the phrases "in an example" or the word "exemplary" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics can be combined in any suitable manner in one or more embodiments. In the following description, numerous specific details are provided, such as examples of layouts, distances, network examples, etc., to provide a thorough understanding of embodiments of the invention. One skilled in the relevant art will recognize, however, that the invention can be practiced without one or more of the specific details, or with other methods, components, layouts, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

### OTHER ASPECTS

In a first broad independent aspect, an embodiment of the invention provides a repeater, comprising:
a first antenna port configured to be coupled to a first antenna;
a second antenna port configured to be coupled to a second antenna;
a third antenna port configured to be coupled to a third antenna;
one or more first direction amplification and filtering paths coupled between the first antenna port and the second antenna port;
one or more second direction amplification and filtering paths coupled between the first antenna port and one of the second antenna port and the third antenna port; and
a controller configured to switch the repeater between:
   a duplex mode, wherein the repeater is configured to communicate a first first-direction RF signal from the second antenna port and communicate a first second-direction RF signal to the second antenna port, and
   a simplex mode wherein the repeater is configured to communicate the first first-direction RF signal from the second antenna port and communicate the first second-direction RF signal to the third antenna port.

In a subsidiary aspect in accordance with any one of the preceding aspects, the controller is further configured to switch the repeater to the duplex mode, wherein the repeater is configured to:
receive the first first-direction RF signal from the second antenna port and communicate the first first-direction RF signal to the first antenna port via the one or more first-direction amplification and filtering paths; and
receive the first second-direction RF signal from the first antenna port and communicate the first second-direction RF signal to the second antenna port via the one or more second-direction amplification and
filtering path to form a first duplex communication path between the first antenna port and the second antenna port.
In a further subsidiary aspect in accordance with any one of the preceding aspects, the repeater further comprises the second antenna configured to be coupled to the second antenna port and configured to receive the first first-direction RF signal and transmit the first second-direction RF signal.

In a further subsidiary aspect in accordance with any one of the preceding aspects, the controller is further configured to switch the repeater to the simplex mode, wherein the repeater is configured to:
receive the first first-direction RF signal from the second antenna port and communicate the first first-direction RF signal to the first antenna port via the one or more first-direction amplification and filtering paths that are configured for simplex communication; and
receive the first second-direction RF signal from the first antenna port and communicate the first second-direction RF signal to the third antenna port via the one or more second-direction amplification and filtering paths that are configured for simplex communication.

In a further subsidiary aspect in accordance with any one of the preceding aspects, the controller is further configured to:
disable the one or more second direction amplification and filtering paths coupled between the first antenna port and the second antenna port to configure the one or more first direction amplification and filtering paths coupled between the first antenna port and the second antenna port for first direction simplex communication; and
disable the one or more first direction amplification and filtering paths coupled between the first antenna port and the third antenna port to configure the one or more second direction amplification and filtering paths coupled between the first antenna port and the third antenna port for second direction simplex communication.

In a subsidiary aspect in accordance with any one of the preceding aspects, the controller is further configured to:
disable the one or more second direction amplification and filtering paths by one or more of:
turning off one or more amplifiers in the second direction amplification and filtering path; or
reducing an amplification level of the one or more amplifiers in the second direction amplification and filtering path; or
increasing an amount of attenuation in the second direction amplification and filtering path; or
shunting one or more signals in the one or more second direction amplification and filtering paths to a ground.

In a subsidiary aspect in accordance with any one of the preceding aspects, the controller is further configured to:
disable the one or more first direction amplification and filtering paths by one or more of:
turning off one or more amplifiers in the first direction amplification and filtering path; or
reducing an amplification level of the one or more amplifiers in the first direction amplification and filtering path; or
increasing an amount of attenuation in the first direction amplification and filtering path; or
shunting one or more signals in the one or more first direction amplification and filtering paths to a ground.

In a subsidiary aspect in accordance with any one of the preceding aspects, the repeater further comprising:
a first broadband fiber optic converter comprising:
a first-direction simplex radio frequency (RF) port configured to be communicatively coupled to the second antenna port of the repeater to communicate the first first-direction RF signal;
a second-direction simplex RF port configured to be communicatively coupled to the third antenna port of the repeater to communicate the first second-direction RF signal; and
a fiber optic port configured to communicate a first-direction optical signal comprising the first first-direction RF signal on a first simplex optical fiber and a second-direction optical signal comprising the first second-direction RF signal on a second simplex optical fiber.

In a further subsidiary aspect in accordance with any one of the preceding aspects, the repeater further comprising:
a second broadband fiber optic converter comprising:
a fiber optic port configured to be coupled to the fiber optic port of the first broadband fiber optic converter and communicate the first-direction optical signal in the first simplex optical fiber comprising the first first-direction RF signal and the second-direction optical signal in the second simplex optical fiber comprising the first second-direction RF signal;
a first-direction RF port configured to be communicatively coupled to the second antenna to communicate the first first-direction RF signal; and
a second-direction RF port configured to be communicatively coupled to the third antenna to communicate the first second-direction RF signal.

In a further subsidiary aspect in accordance with any one of the preceding aspects, the repeater further comprises:
a switch that is switchably coupled between:
   a switchable second-direction amplification and filtering path that is one of the one or more second-direction amplification and filtering paths;
   the second antenna port; and
   the third antenna port;
wherein the controller is further configured to switch the repeater:
   to the duplex mode by directing the switch to couple the switchable second-direction amplification and filtering path to the second antenna port; and
   to the simplex mode by directing the switch to couple the switchable second-direction amplification and filtering path to the third antenna port.

In a further subsidiary aspect in accordance with any one of the preceding aspects, the controller is further configured to switch the repeater to the duplex mode, wherein the repeater is configured to:
receive a second first-direction RF signal from the third antenna port and communicate the second first-direction RF signal to the first antenna port via the one or more first-direction amplification and filtering paths; and
receive a second second-direction RF signal from the first antenna port and communicate the second second-direction RF signal to the third antenna port via the one or more second-direction amplification and filtering paths to form a second duplex communication path between the first antenna port and the third antenna port.

In a further subsidiary aspect in accordance with any one of the preceding aspects, the repeater further comprises the third antenna configured to be coupled to the third antenna port and configured to receive the second first-direction RF signal and transmit the second second-direction RF signal.

In a subsidiary aspect in accordance with any one of the preceding aspects, the repeater is a frequency division duplex (FDD) repeater that is configured for FDD signals or the repeater is a time division duplex (TDD) repeater that is configured for TDD signals.

In a subsidiary aspect in accordance with any one of the preceding aspects, the repeater further comprises additional antenna ports that are configured to be communicatively coupled to the one or more second direction amplification and filtering paths when the repeater is switched to the simplex mode.

In a further broad independent aspect, embodiments of the invention present a repeater, comprising:
a donor antenna port configured to be coupled to a donor antenna;
a first server antenna port configured to be coupled to a first server antenna;
a second server antenna port configured to be coupled to a second server antenna;
one or more uplink amplification and filtering paths coupled between the donor antenna port and the first server antenna port;
one or more downlink amplification and filtering paths coupled between the donor antenna port and one of the first server antenna port and the second server antenna port; and
a controller configured to switch the repeater between:
   a duplex mode, wherein the repeater is configured to communicate a first uplink RF signal from the first server antenna port and communicate a first downlink RF signal to the second server antenna port, and
   a simplex mode wherein the repeater is configured to communicate the first uplink RF signal from the first server antenna port and communicate the first downlink RF signal to the second server antenna port.

In a further subsidiary aspect in accordance with any one of the preceding aspects, the controller is further configured to switch the repeater to the duplex mode, wherein the repeater is configured to:
receive the first uplink RF signal from the first server antenna port and communicate the first uplink RF signal to the donor antenna port via the one or more uplink amplification and filtering paths; and
receive the first downlink RF signal from the donor antenna port and communicate the first downlink RF signal to the first server antenna port via the one or more downlink amplification and filtering paths to form a first duplex communication path between the donor antenna port and the first server antenna port.

In a further subsidiary aspect in accordance with any one of the preceding aspects, the repeater further comprising the second server antenna configured to be coupled to the second antenna port and configured to receive the first uplink RF signal and transmit the first downlink RF signal.

In a further subsidiary aspect in accordance with any one of the preceding aspects, the controller is further configured to switch the repeater to the simplex mode, wherein the repeater is configured to:
receive the first uplink RF signal from the first server antenna port and communicate the first uplink RF signal to the donor antenna port via the one or more uplink amplification and filtering paths that are configured for simplex communication; and
receive the first downlink RF signal from the donor antenna port and communicate the first downlink RF signal to the second server antenna port via the one or more downlink amplification and filtering paths that are configured for simplex communication.

In a further subsidiary aspect in accordance with any one of the preceding aspects, the controller is further configured to:
disable the one or more downlink amplification and filtering paths coupled between the donor antenna port and the first server antenna port to configure the one or more uplink amplification and filtering paths coupled between the donor antenna port and the first server antenna port for uplink simplex communication; and
disable the one or more uplink amplification and filtering paths coupled between the donor antenna port and the second server antenna port to configure the one or more downlink amplification and filtering paths coupled between the donor antenna port and the second server antenna port for downlink simplex communication.

In a further subsidiary aspect in accordance with any one of the preceding aspects, the controller is further configured to:
disable the one or more downlink amplification and filtering paths by one or more of:
turning off one or more amplifiers in the downlink amplification and filtering path; or
reducing an amplification level of the one or more amplifiers in the downlink amplification and filtering path; or
increasing an amount of attenuation in the downlink amplification and filtering path; or
shunting one or more signals in the one or more downlink amplification and filtering paths to a ground.

In a further subsidiary aspect in accordance with any one of the preceding aspects, the controller is further configured to:
disable the one or more uplink amplification and filtering paths by one or more of:
   turning off one or more amplifiers in the uplink amplification and filtering path; or
   reducing an amplification level of the one or more amplifiers in the uplink amplification and filtering path; or
   increasing an amount of attenuation in the uplink amplification and filtering path; or
shunting one or more signals in the one or more uplink amplification and filtering paths to a ground.

In a further subsidiary aspect in accordance with any one of the preceding aspects, the repeater further comprising:
a first broadband fiber optic converter comprising:
an uplink simplex radio frequency (RF) port configured to be communicatively coupled to the first server antenna port of the repeater to communicate the first UL RF signal;
a downlink RF port configured to be communicatively coupled to the second server antenna port of the repeater to communicate the first downlink RF signal; and
a fiber optic port configured to communicate an uplink optical signal comprising the first uplink RF signal on a first simplex optical fiber and a downlink optical signal comprising the first downlink RF signal on a second simplex optical fiber.

In a further subsidiary aspect in accordance with any one of the preceding aspects, the repeater further comprising:
a second broadband fiber optic converter comprising:
a fiber optic port configured to be coupled to the fiber optic port of the first broadband fiber optic converter and communicate the uplink optical signal in the first simplex optical fiber comprising the first uplink RF signal and the downlink optical signal in the second simplex optical fiber comprising the first downlink RF signal;
an uplink RF port configured to be communicatively coupled to the first server antenna to communicate the first uplink RF signal; and
a downlink RF port configured to be communicatively coupled to the second server antenna to communicate the first downlink RF signal.

In a further subsidiary aspect in accordance with any one of the preceding aspects, the repeater further comprises:
a switch that is switchably coupled between:
a switchable downlink amplification and filtering path that is one of the one or more downlink amplification and filtering paths;
the first server antenna port; and
the second server antenna port;
wherein the controller is further configured to switch the repeater:
   to the duplex mode by directing the switch to couple the switchable downlink amplification and filtering path to the first server antenna port; and
   to the simplex mode by directing the switch to couple the switchable downlink amplification and filtering path to the second server antenna port.

In a further subsidiary aspect in accordance with any one of the preceding aspects, the controller is further configured to switch the repeater to the duplex mode, wherein the repeater is configured to:
receive a second uplink (UL) RF signal from the second server antenna port and communicate the second uplink RF signal to the donor antenna port via the one or more uplink amplification and filtering paths; and
receive a second downlink (DL) RF signal from the donor antenna port and communicate the second downlink RF signal to the second server antenna port via the one or more downlink amplification and filtering paths to form a second duplex communication path between the first antenna port and the second server antenna port.

In a further subsidiary aspect in accordance with any one of the preceding aspects, the repeater further comprising the second server antenna configured to be coupled to the second server antenna port and configured to receive the second UL RF signal and transmit the second DL RF signal.

In a further subsidiary aspect in accordance with any one of the preceding aspects, the repeater is a frequency division duplex (FDD) repeater configured for FDD signals or a time division duplex (TDD) repeater configured for time division duplex signals.

In a further subsidiary aspect in accordance with any one of the preceding aspects, the repeater further comprising additional antenna ports that are configured to be communicatively coupled to the one or more downlink amplification and filtering paths when the repeater is switched to the simplex mode.

## Claims

1. A repeater, comprising:
a first antenna port configured to be coupled to a first antenna;
a second antenna port configured to be coupled to a second antenna;
a third antenna port configured to be coupled to a third antenna;
one or more first direction amplification and filtering paths coupled between the first antenna port and the second antenna port;
one or more second direction amplification and filtering paths coupled between the first antenna port and one of the second antenna port and the third antenna port; and
a controller configured to switch the repeater between:
a duplex mode, wherein the repeater is configured to communicate a first first-direction RF signal from the second antenna port and communicate a first second-direction RF signal to the second antenna port, and
a simplex mode wherein the repeater is configured to communicate the first first-direction RF signal from the second antenna port and communicate the first second-direction RF signal to the third antenna port.

2. The repeater of claim 1, wherein the controller is further configured to switch the repeater to the duplex mode, wherein the repeater is configured to:
receive the first first-direction RF signal from the second antenna port and communicate the first first-direction RF signal to the first antenna port via the one or more first-direction amplification and filtering paths; and
receive the first second-direction RF signal from the first antenna port and communicate the first second-direction RF signal to the second antenna port via the one or more second-direction amplification and filtering path to form a first duplex communication path between the first antenna port and the second antenna port.

3. The repeater of either claim 1 or claim 2, further comprising the second antenna configured to be coupled to the second antenna port and configured to receive the first first-direction RF signal and transmit the first second-direction RF signal.

4. The repeater of any one of the preceding claims, wherein the controller is further configured to switch the repeater to the simplex mode, wherein the repeater is configured to:
receive the first first-direction RF signal from the second antenna port and communicate the first first-direction RF signal to the first antenna port via the one or more first-direction amplification and filtering paths that are configured for simplex communication; and
receive the first second-direction RF signal from the first antenna port and communicate the first second-direction RF signal to the third antenna port via the one or more second-direction amplification and filtering paths that are configured for simplex communication.

5. The repeater of claim 4, wherein the controller is further configured to:
disable the one or more second direction amplification and filtering paths coupled between the first antenna port and the second antenna port to configure the one or more first direction amplification and filtering paths coupled between the first antenna port and the second antenna port for first direction simplex communication; and
disable the one or more first direction amplification and filtering paths coupled between the first antenna port and the third antenna port to configure the one or more second direction amplification and filtering paths coupled between the first antenna port and the third antenna port for second direction simplex communication.

6. The repeater of claim 4, wherein the controller is further configured to:
disable the one or more second direction amplification and filtering paths by one or more of:
turning off one or more amplifiers in the second direction amplification and filtering path; or
reducing an amplification level of the one or more amplifiers in the second direction amplification and filtering path; or
increasing an amount of attenuation in the second direction amplification and filtering path; or
shunting one or more signals in the one or more second direction amplification and filtering paths to a ground.

7. The repeater of claim 4, wherein the controller is further configured to:
disable the one or more first direction amplification and filtering paths by one or more of:
turning off one or more amplifiers in the first direction amplification and filtering path; or
reducing an amplification level of the one or more amplifiers in the first direction amplification and filtering path; or
increasing an amount of attenuation in the first direction amplification and filtering path; or
shunting one or more signals in the one or more first direction amplification and filtering paths to a ground.

8. The repeater of claim 4, further comprising:
a first broadband fiber optic converter comprising:
a first-direction simplex radio frequency (RF) port configured to be communicatively coupled to the second antenna port of the repeater to communicate the first first-direction RF signal;
a second-direction simplex RF port configured to be communicatively coupled to the third antenna port of the repeater to communicate the first second-direction RF signal; and
a fiber optic port configured to communicate a first-direction optical signal comprising the first first-direction RF signal on a first simplex optical fiber and a second-direction optical signal comprising the first second-direction RF signal on a second simplex optical fiber.

9. The repeater of claim 8, further comprising:
a second broadband fiber optic converter comprising:
a fiber optic port configured to be coupled to the fiber optic port of the first broadband fiber optic converter and communicate the first-direction optical signal in the first simplex optical fiber comprising the first first-direction RF signal and the second-direction optical signal in the second simplex optical fiber comprising the first second-direction RF signal;
a first-direction RF port configured to be communicatively coupled to the second antenna to communicate the first first-direction RF signal; and
a second-direction RF port configured to be communicatively coupled to the third antenna to communicate the first second-direction RF signal.

10. The repeater of any one of the preceding claims, wherein the repeater further comprises:
a switch that is switchably coupled between:
a switchable second-direction amplification and filtering path that is one of the one or more second-direction amplification and filtering paths;
the second antenna port; and
the third antenna port;
wherein the controller is further configured to switch the repeater:
to the duplex mode by directing the switch to couple the switchable second-direction amplification and filtering path to the second antenna port; and
to the simplex mode by directing the switch to couple the switchable second-direction amplification and filtering path to the third antenna port.

11. The repeater of any one of the preceding claims, wherein the controller is further configured to switch the repeater to the duplex mode, wherein the repeater is configured to:
receive a second first-direction RF signal from the third antenna port and communicate the second first-direction RF signal to the first antenna port via the one or more first-direction amplification and filtering paths; and
receive a second second-direction RF signal from the first antenna port and communicate the second second-direction RF signal to the third antenna port via the one or more second-direction amplification and filtering paths to form a second duplex communication path between the first antenna port and the third antenna port.

12. The repeater of claim 11, further comprising the third antenna configured to be coupled to the third antenna port and configured to receive the second first-direction RF signal and transmit the second second-direction RF signal.

13. The repeater of any one of the preceding claims, wherein the repeater is a frequency division duplex (FDD) repeater that is configured for FDD signals or the repeater is a time division duplex (TDD) repeater that is configured for TDD signals.

14. The repeater of any one of the preceding claims, further comprising additional antenna ports that are configured to be communicatively coupled to the one or more second direction amplification and filtering paths when the repeater is switched to the simplex mode.

15. A repeater, comprising:
a donor antenna port configured to be coupled to a donor antenna;
a first server antenna port configured to be coupled to a first server antenna;
a second server antenna port configured to be coupled to a second server antenna;
one or more uplink amplification and filtering paths coupled between the donor antenna port and the first server antenna port;
one or more downlink amplification and filtering paths coupled between the donor antenna port and one of the first server antenna port and the second server antenna port; and
a controller configured to switch the repeater between:
a duplex mode, wherein the repeater is configured to communicate a first uplink RF signal from the first server antenna port and communicate a first downlink RF signal to the second server antenna port, and
a simplex mode wherein the repeater is configured to communicate the first uplink RF signal from the first server antenna port and communicate the first downlink RF signal to the second server antenna port.
